# EUROPEAN PATENT APPLICATION

(11) **EP 2 869 499 A1**
(43) Date of publication of application: **06.05.2015**
(21) Application number: 13810817.0
(22) Date of filing: 15.02.2013
(51) Int. Cl.: H04L 12/28, H04L 12/713

(54) **SWITCH, TRANSMISSION METHOD, PROGRAM, AND RECORDING MEDIUM**

(30) Priority: 29.06.2012 JP 2012147009
(71) Applicant: Allied Telesis Holdings K.K., Tokyo 141-0031 (JP)
(72) Inventor: YAMAMOTO, Hiroyuki, Tokyo 141-0031 (JP)
(74) Representative: Hess, Peter K. G.
(86) International application number: PCT/JP2013/054426
(87) International publication number: WO 2014/002525

(57) **Abstract**

A switch according to the present invention is a switch 20a for transmitting an LACP frame to a server 10, another switch 20b transmits another LACP frame to the server 10, the LACP frame and the other LACP frame serve to request link aggregation from the server 10, and a system identifier of the LACP frame is the same as the system identifier of the other LACP frame. A plurality of the bypass ports eth3, eth4 exist. A failed aggregation group identifier oxooBB with which a failed port etho is associated and the port identifier eth3 of a determined bypass port are associated with each other in advance in a bypass port recording unit ₂₁₂. Port identifiers of different determined bypass ports are associated with different failed aggregation group identifiers.

## Description

### Technical Field

The present invention relates to link aggregation relating to a network device (such as a switch).

### Background Art

When two network devices (such as a switch and a server) are connected with each other via one certain line, if data communicated between the network devices is excessive, communication can be delayed.

In this case, the communication can be carried out at a high speed by connecting the two network devices via multiple lines, and treating the multiple lines as one logical line (referred to as link aggregation, refer to Patent Documents 1, 2, and 3). For example, if the two network devices are connected via four lines, it is expected that the communication speed be approximately four times as high as that in a case in which the two network devices are connected via one line.

Moreover, according to the link aggregation, even if a part (one, for example) of the multiple lines fails, the communication can be continued via the other lines.

The LACP (Link Aggregation Control Protocol) (refer to Patent Documents 1 and 2) is often used in order to set the link aggregation.

There is a technology for taking over an operation from a packet processing device of an active system to a packet processing device of a standby system, which is not the link aggregation (refer to Patent Document 4).

### (Prior Art Documents)

(Patent Document 1) Japanese Laid-Open Patent Publication (Kokai) No. 2005-333549
(Patent Document 2) US patent No. 6910149
(Patent Document 3) US patent No. 7173934
(Patent Document 4) Japanese Laid-Open Patent Publication (Kokai) No. 2006-33467

### Summary of the Invention

On this occasion, any of the multiple lines which can be treated as one line by means of the LACP must serve to connect the same network devices.

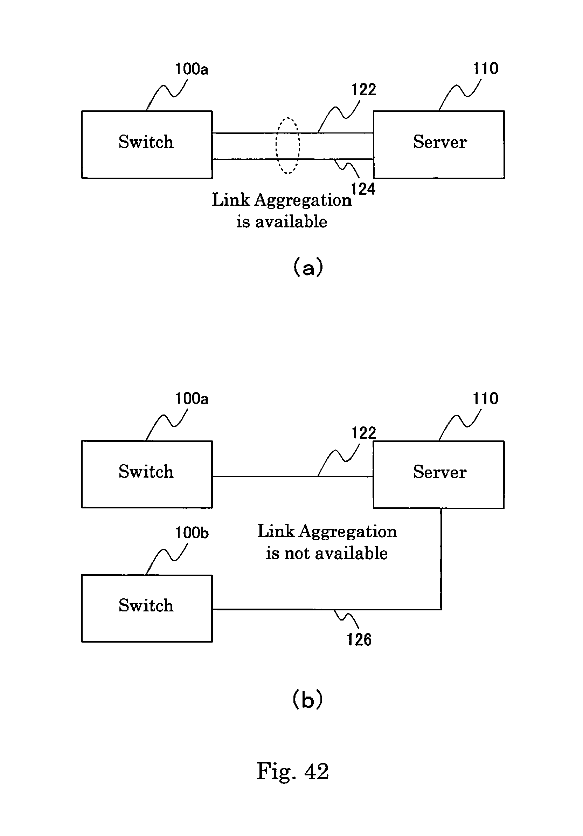

FIG. 42 is a diagram showing the conventional technology, and shows a network configuration (FIG. 42(a)) for a case in which the link aggregation is available by means of the LACP and a network configuration (FIG. 42(b)) for a case in which the link aggregation is not available by means of the LACP.

Referring to FIG. 42(a), either of a line 122 and a line 124 connects a switch 100a and a server 110 with each other, and can be subject to the link aggregation by means of the LACP.

Moreover, referring to FIG. 42(b), the line 122 connects the switch 100a and the server 110 with each other, on the other hand, a line 126 connects a switch 100b and the server 110 with each other, and the line 122 and the line 126 connect the different network devices (switch 100a and the switch 100b). In this case, the link aggregation by means of the LACP is not available.

However, there is a need for applying the link aggregation to the line 122 and the line 126.

Then, the present invention has an object to provide the link aggregation for another network device when two network devices (switches) are connected to the other network device.

The present invention is a switch for transmitting an LACP frame to a network device, wherein: another switch transmits another LACP frame to the network device; the LACP frame and the other LACP frame serve to request link aggregation from the network device; and a system identifier of the LACP frame is the same as the system identifier of the other LACP frame, the switch including an aggregation information setting unit that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the switch including: a link state determination unit that determines presence or absence of a failure of a link to which a port represented by the port identifier is connected; a bypass port recording unit that records the aggregation group identifier and the port identifier of the bypass port associated with each other before the determination; a bypass port determination unit that associates the bypass port represented by the port identifier associated with a failed aggregation group identifier in the bypass port recording unit as a determined bypass port with the failed aggregation group identifier; a data transfer unit that transfers communication data received by all ports other than the failed port and the bypass port to the determined bypass port; and a state notification unit that transmits the failed aggregation group identifier and the port identifier of the determined bypass port associated with each other by the bypass port determination unit from the determined bypass port, wherein: the aggregation information setting unit deletes the port identifier representing the failed port from the aggregation information, and adds the port identifier representing the determined bypass port; the bypass port determination unit associates a different failed aggregation group identifier with a port identifier of a different determined bypass port; the failed port is a port connected to the link which is determined to be failed by the link state determination unit; and the failed aggregation group identifier is the aggregation group identifier associated with the failed port in the aggregation information.

According to the thus constructed switch, a switch for transmitting an LACP frame to a network device can be provided. Another switch transmits another LACP frame to the network device. The LACP frame and the other LACP frame serve to request link aggregation from the network device. A system identifier of the LACP frame is the same as the system identifier of the other LACP frame. The switch includes an aggregation information setting unit that receives a notification that the aggregation request by the LACP frame is permitted from the network device, and sets aggregation information. The aggregation information includes a system identifier, an aggregation group identifier, and a port identifier. A bypass port of the switch is connected to a bypass port of the other switch. A plurality of the bypass ports exist. A link state determination unit determines presence or absence of a failure of a link to which a port represented by the port identifier is connected. A bypass port recording unit records the aggregation group identifier and the port identifier of the bypass port associated with each other before the determination. A bypass port determination unit associates the bypass port represented by the port identifier associated with a failed aggregation group identifier in the bypass port recording unit as a determined bypass port with the failed aggregation group identifier. A data transfer unit transfers communication data received by all ports other than the failed port and the bypass port to the determined bypass port. A state notification unit transmits the failed aggregation group identifier and the port identifier of the determined bypass port associated with each other by the bypass port determination unit from the determined bypass port. The aggregation information setting unit deletes the port identifier representing the failed port from the aggregation information, and adds the port identifier representing the determined bypass port. The bypass port determination unit associates a different failed aggregation group identifier with a port identifier of a different determined bypass port. The failed port is a port connected to the link which is determined to be failed by the link state determination unit. The failed aggregation group identifier is the aggregation group identifier associated with the failed port in the aggregation information.

According to the present invention, the switch may include a virtual LAN recording unit that records the aggregation group identifier and the port identifier belonging to a virtual LAN wherein the virtual LAN recording unit records the port identifier of the bypass port associated with the aggregation group identifier in the bypass port recording unit before the determination.

According to the switch of the present invention, if the failed aggregation group identifier is not associated with the port identifier of the bypass port in the bypass port recording unit, the bypass port determination unit may determine any one of the bypass ports as the determined bypass port.

According to the switch of the present invention, if the link state determination unit determines that the link connected to the failed port is not failed, the data transfer to the determined bypass port associated with the failed aggregation group identifier associated with the failed port (referred to as "recovered port") by the data transfer unit may be stopped; the state notification unit may transmit the determination of the absence of a failure from the determined bypass port; the aggregation information setting unit may delete the port identifier representing the determined bypass port from the aggregation information, and add the port identifier representing the recovered port; and the bypass port determination unit may reset the association between the failed aggregation group identifier with which the recovered port is associated and the port identifier of the determined bypass port.

The present invention is a switch for transmitting an LACP frame to a network device, wherein: another switch transmits another LACP frame to the network device; the LACP frame and the other LACP frame serve to request link aggregation from the network device; and a system identifier of the LACP frame is the same as the system identifier of the other LACP frame, the switch including an aggregation information setting unit that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the switch including: an identifier recording unit that receives and records the aggregation group identifier and a port identifier of one of the bypass ports from the bypass port, and a data transfer unit that transfers communication data received by the bypass port represented by the port identifier recorded in the identifier recording unit to a port represented by a port identifier associated with the aggregation group identifier recorded by the identifier recording unit, and a virtual LAN recording unit that records the aggregation group identifier and the port identifier belonging to a virtual LAN, wherein: the virtual LAN recording unit records the port identifier of the bypass port before the bypass port receives the aggregation group identifier and the port identifier of the one bypass port; and a port identifier of a different bypass port is associated with a different aggregation group identifier in a recorded content by the identifier recording unit.

According to the thus constructed switch, a switch for transmitting an LACP frame to a network device can be provided. Another switch transmits another LACP frame to the network device. The LACP frame and the other LACP frame serve to request link aggregation from the network device. A system identifier of the LACP frame is the same as the system identifier of the other LACP frame. The switch includes an aggregation information setting unit that receives a notification that the aggregation request by the LACP frame is permitted from the network device, and sets aggregation information. The aggregation information includes a system identifier, an aggregation group identifier, and a port identifier. A bypass port of the switch is connected to a bypass port of the other switch. A plurality of the bypass ports exist. An identifier recording unit receives and records the aggregation group identifier and a port identifier of one of the bypass ports from the bypass port. A data transfer unit transfers communication data received by the bypass port represented by the port identifier recorded in the identifier recording unit to a port represented by a port identifier associated with the aggregation group identifier recorded by the identifier recording unit. A virtual LAN recording unit records the aggregation group identifier and the port identifier belonging to a virtual LAN. The virtual LAN recording unit records the port identifier of the bypass port before the bypass port receives the aggregation group identifier and the port identifier of the one bypass port. A port identifier of a different bypass port is associated with a different aggregation group identifier in a recorded content by the identifier recording unit.

According to the switch of the present invention, if determination of absence of a failure is received from the bypass port, the transfer of the communication data from the bypass port by the data transfer unit may be stopped; and the aggregation group identifier with which the port determined not to be failed is associated, and the port identifier of the bypass port associated with the aggregation group identifier may be deleted from the recorded content of the identifier recording unit.

The present invention is a method for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the method including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the method including: a link state determination step that determines presence or absence of a failure of a link to which a port represented by the port identifier is connected; a bypass port recording step that records the aggregation group identifier and the port identifier of the bypass port associated with each other before the determination; a bypass port determination step that associates the bypass port represented by the port identifier associated with a failed aggregation group identifier in the bypass port recording step as a determined bypass port with the failed aggregation group identifier; a data transfer step that transfers communication data received by all ports other than the failed port and the bypass port to the determined bypass port; and a state notification step that transmits the failed aggregation group identifier and the port identifier of the determined bypass port associated with each other by the bypass port determination step from the determined bypass port, wherein: the aggregation information setting step deletes the port identifier representing the failed port from the aggregation information, and adds the port identifier representing the determined bypass port; the bypass port determination step associates a different failed aggregation group identifier with a port identifier of a different determined bypass port; the failed port is a port connected to the link which is determined to be failed by the link state determination step; and the failed aggregation group identifier is the aggregation group identifier associated with the failed port in the aggregation information.

The present invention is a method for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the method including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the method including: an identifier recording step that receives and records the aggregation group identifier and a port identifier of one of the bypass ports from the bypass port, and a data transfer step that transfers communication data received by the bypass port represented by the port identifier recorded in the identifier recording step to a port represented by a port identifier associated with the aggregation group identifier recorded by the identifier recording step, and a virtual LAN recording step that records the aggregation group identifier and the port identifier belonging to a virtual LAN, wherein: the virtual LAN recording step records the port identifier of the bypass port before the bypass port receives the aggregation group identifier and the port identifier of the one bypass port; and a port identifier of a different bypass port is associated with a different aggregation group identifier in a recorded content by the identifier recording step.

The present invention is a program of instructions for execution by a computer to perform a process for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the process including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the process including: a link state determination step that determines presence or absence of a failure of a link to which a port represented by the port identifier is connected; a bypass port recording step that records the aggregation group identifier and the port identifier of the bypass port associated with each other before the determination; a bypass port determination step that associates the bypass port represented by the port identifier associated with a failed aggregation group identifier in the bypass port recording step as a determined bypass port with the failed aggregation group identifier; a data transfer step that transfers communication data received by all ports other than the failed port and the bypass port to the determined bypass port; and a state notification step that transmits the failed aggregation group identifier and the port identifier of the determined bypass port associated with each other by the bypass port determination step from the determined bypass port, wherein: the aggregation information setting step deletes the port identifier representing the failed port from the aggregation information, and adds the port identifier representing the determined bypass port; the bypass port determination step associates a different failed aggregation group identifier with a port identifier of a different determined bypass port; the failed port is a port connected to the link which is determined to be failed by the link state determination step; and the failed aggregation group identifier is the aggregation group identifier associated with the failed port in the aggregation information.

The present invention is a program of instructions for execution by a computer to perform a process for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the process including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the process including: an identifier recording step that receives and records the aggregation group identifier and a port identifier of one of the bypass ports from the bypass port, and a data transfer step that transfers communication data received by the bypass port represented by the port identifier recorded in the identifier recording step to a port represented by a port identifier associated with the aggregation group identifier recorded by the identifier recording step, and a virtual LAN recording step that records the aggregation group identifier and the port identifier belonging to a virtual LAN, wherein: the virtual LAN recording step records the port identifier of the bypass port before the bypass port receives the aggregation group identifier and the port identifier of the one bypass port; and a port identifier of a different bypass port is associated with a different aggregation group identifier in a recorded content by the identifier recording step.

The present invention is a computer-readable medium having a program of instructions for execution by a computer to perform a process for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the process including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the process including: a link state determination step that determines presence or absence of a failure of a link to which a port represented by the port identifier is connected; a bypass port recording step that records the aggregation group identifier and the port identifier of the bypass port associated with each other before the determination; a bypass port determination step that associates the bypass port represented by the port identifier associated with a failed aggregation group identifier in the bypass port recording step as a determined bypass port with the failed aggregation group identifier; a data transfer step that transfers communication data received by all ports other than the failed port and the bypass port to the determined bypass port; and a state notification step that transmits the failed aggregation group identifier and the port identifier of the determined bypass port associated with each other by the bypass port determination step from the determined bypass port, wherein: the aggregation information setting step deletes the port identifier representing the failed port from the aggregation information, and adds the port identifier representing the determined bypass port; the bypass port determination step associates a different failed aggregation group identifier with a port identifier of a different determined bypass port; the failed port is a port connected to the link which is determined to be failed by the link state determination step; and the failed aggregation group identifier is the aggregation group identifier associated with the failed port in the aggregation information.

The present invention is a computer-readable medium having a program of instructions for execution by a computer to perform a process for transmitting an LACP frame to a network device with using a switch, wherein: another switch transmits another LACP frame to the network device; the LACP frame and the other LACP frame serve to request link aggregation from the network device; and a system identifier of the LACP frame is the same as the system identifier of the other LACP frame, the process including an aggregation information setting step that receives a notification that the aggregation request by the LACP frame is permitted from the network device, and sets aggregation information, wherein: the aggregation information includes a system identifier, an aggregation group identifier, and a port identifier; a bypass port of the switch is connected to a bypass port of the other switch; and a plurality of the bypass ports exist, the process including: an identifier recording step that receives and records the aggregation group identifier and a port identifier of one of the bypass ports from the bypass port, and a data transfer step that transfers communication data received by the bypass port represented by the port identifier recorded in the identifier recording step to a port represented by a port identifier associated with the aggregation group identifier recorded by the identifier recording step, and a virtual LAN recording step that records the aggregation group identifier and the port identifier belonging to a virtual LAN, wherein: the virtual LAN recording step records the port identifier of the bypass port before the bypass port receives the aggregation group identifier and the port identifier of the one bypass port; and a port identifier of a different bypass port is associated with a different aggregation group identifier in a recorded content by the identifier recording step.

### BRIEF DESCRIPTION OF THE DRAWINGS

FIG. 1 is a diagram showing a network configuration of switches 20a and 20b according to a first embodiment of the present invention,
FIG. 2 is a functional block diagram showing a configuration of the server (network device) 10 according to the first embodiment,
FIG. 3 is a diagram showing an example of the recorded content of the aggregation group information recording unit 14 according to the first embodiment,
FIG. 4 is a functional block diagram showing a configuration of the switches 20a and 20b according to the first embodiment,
FIG. 5 is a diagram showing information input by the aggregation request input unit 21 of the switch 20a according to the first embodiment (refer to FIG. 5(a)), and information input by the aggregation request input unit 21 of the switch 20b according to the first embodiment (refer to FIG. 5(b)),
FIG. 6 is a diagram showing an example of the recorded content of the aggregation group information recording unit 24 according to the first embodiment,
FIG. 7 is a flowchart showing an operation of the server 10 according to the first embodiment,
FIG. 8 is a flowchart showing an operation of the switch 20a and the switch 20b according to the first embodiment,
FIG. 9 is a chart showing flows of operations of the switch 20a, the switch 20b, and the server 10 according to the first embodiment,
FIG. 10 is a diagram showing a network configuration in which a server 30 is added to the server 10 and the switches 20a and 20b,
FIG. 11 is a diagram showing a case in which the link aggregation (group identifier: oxooAA) is also permitted on the server 30 in the network configuration shown in FIG. 10,
FIG. 12 is a drawing showing a case in which a physical link connecting the port etho of the switch 20b and the port eth1 of the server 10 fails in the network configuration shown in FIG. 11,
FIG. 13 is a diagram showing a network configuration of the switches 20a and 20b according to the second embodiment of the present invention (when a physical link fails),
FIG. 14 is a diagram showing a network configuration of the switches 20a and 20b according to the second embodiment of the present invention (when the failed physical link is recovered),
FIG. 15 is a functional block diagram showing a configuration of the switch 20a according to the second embodiment of the present invention,
FIG. 16 is a functional block diagram showing a configuration of the switch 20b according to the second embodiment of the present invention,
FIG. 17 is a flowchart showing an operation of the switch 20a according to the second embodiment,
FIG. 18 is a flowchart showing an operation of the switch 20b according to the second embodiment,
FIG. 19 is a flowchart showing operations of the switch 20a, the switch 20b, and the server 10 according to the second embodiment (when a failure occurs on the physical link),
FIG. 20 is a flowchart showing operations of the switch 20a, the switch 20b, and the server 10 according to the second embodiment (when the physical link recovers from a failure),
FIG. 21 is a diagram showing a network configuration of the switches 20a and 20b according to the third embodiment of the present invention (in a case in which data is transmitted from the server 30(A) to the server 10(B)),
FIG. 22 is a diagram showing a network configuration of the switches 20a and 20b according to the third embodiment of the present invention (in a case in which data is transmitted from the server 30(A) to the server 40(C)),
FIG. 23 is a diagram showing an example of the recorded content of the aggregation group information recording unit 24 according to the third embodiment,
FIG. 24 is a diagram showing a network configuration of the switches 20a and 20b according to the third embodiment (when a failure occurs on the physical link connecting the port etho of the switch 20b and the port eth1 of the server 10(B) with each other),
FIG. 25 is a diagram showing a network configuration of the switches 20a and 20b according to the third embodiment (when failures occur on the physical link connecting the port etho of the switch 20b and the port eth1 of the server 10(B) and on the physical link connecting the port eth2 of the switch 20b and the port eth1 of the server 40(C)),
FIG. 26 is a diagram showing a network configuration of the switches 20a and 20b according to the third embodiment (upon recovery from the failure on the physical link connecting the port etho of the switch 20b and the port eth1 of the server 10(B)),
FIG. 27 is a functional block diagram showing a configuration common to the switches 20a and 20b according to the third embodiment of the present invention,
FIG. 28 is a drawing showing VLAN tables recorded by the VLAN table recording unit 23, and shows a VLAN table (FIG. 28(a)) relating to the VLAN1, a VLAN table (FIG. 28(b)) relating to the VLAN2, and a VLAN table (FIG. 28(c)) relating to the VLAN3,
FIG. 29 is a functional block diagram showing a configuration of the switch 20a according to the third embodiment of the present invention,
FIG. 30 is a functional block diagram showing a configuration of the switch 20b according to the third embodiment of the present invention,
FIG. 31 is a diagram showing a recorded content of the determined bypass port recording unit 204,
FIG. 32 is a flowchart showing an operation of the switches 20a and 20b according to the third embodiment (upon addition of a determined bypass port),
FIG. 33 is a flowchart showing an operation of the switches 20a and 20b according to the third embodiment (upon deletion of a determined bypass port),
FIG. 34 is a flowchart showing an operation of the switch 20a according to the third embodiment (upon reception of an abnormality notification),
FIG. 35 is a flowchart showing an operation of the switch 20a according to the third embodiment (upon reception of a recovery notification),
FIG. 36 is a flowchart showing an operation of the switch 20b according to the third embodiment (in an abnormal state),
FIG. 37 is a flowchart showing an operation of the switch 20b according to the third embodiment (upon recovery),
FIG. 38 is a flowchart showing a transition of a state of the switch 20b according to the third embodiment,
FIG. 39 is a chart showing flows of the operations of the switch 20a, the switch 20b, and the server 10 according to the third embodiment when the abnormality occurs (S1) in the aggregation group oxooBB,
FIG. 40 is a chart showing flows of operations of the switch 20a, the switch 20b, and the server 10 according to the third embodiment when the abnormality occurs (S2) in the aggregation group oxooCC,
FIG. 41 is a chart showing flows of operations of the switch 20a, the switch 20b, and the server 10 according to the third embodiment upon the recovery of the aggregation group oxooBB, and
FIG. 42 is a diagram showing the conventional technology, and shows a network configuration (FIG. 42(a)) for a case in which the link aggregation is available by means of the LACP and a network configuration (FIG. 42(b)) for a case in which the link aggregation is not available by means of the LACP.

### Modes for Carrying out the Invention

A description will now be given of embodiments of the present invention referring to drawings.

### First Embodiment

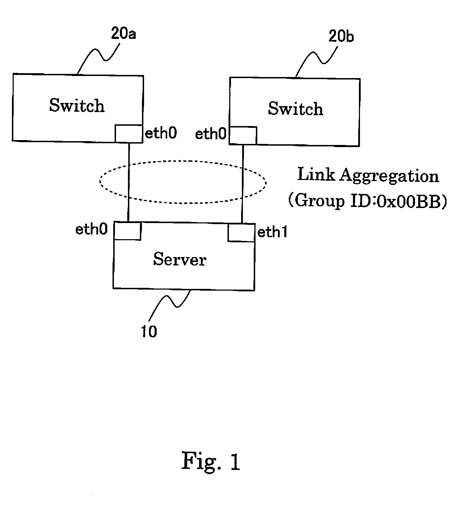

FIG. 1 is a diagram showing a network configuration of switches 20a and 20b according to a first embodiment of the present invention.

A port etho of the switch 20a is connected to a port etho of a server (network device) 10. A port etho of the switch 20b is connected to a port eth1 of the server (network device) 10. The switch 20a transmits an LACP frame to the server 10. The other switch 20b also transmits other LACP frame to the server 10. The LACP frame and the other LACP frame serve to request the link aggregation from the server 10. On this occasion, a system identifier of the LACP frame and a system identifier of the other LACP frame are the same (this is a point different from the conventional LACP), and the link aggregation is thus permitted. It should be noted that an aggregation group identifier (ID) is oxooBB.

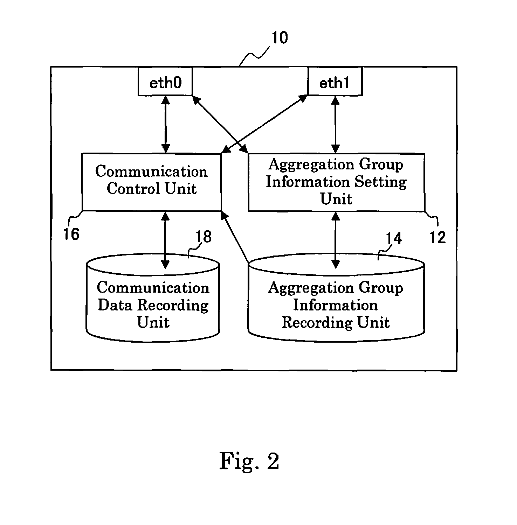

FIG. 2 is a functional block diagram showing a configuration of the server (network device) 10 according to the first embodiment. The server 10 is a well-known server which receives an LACP frame, and permits the link aggregation. The server 10 is a server used in a data center, for example.

The server 10 includes the ports etho and eth1, an aggregation group information setting unit 12, an aggregation group information recording unit 14, a communication control unit 16, and a communication data recording unit 18.

The aggregation group information setting unit 12 receives LACP frames from the port etho and the port eth1, and reads out the aggregation group information from the aggregation group information recording unit 14. The aggregation group information setting unit 12 determines whether to permit or not the request for the link aggregation by the LACP frames based on a recorded content in the aggregation group information recording unit 14, and transmits a result thereof (permission or rejection) from the port etho or the port eth1.

If the aggregation group information setting unit 12 permits the request for the link aggregation, the aggregation group information setting unit 12 sets aggregation information. Namely, the aggregation group information setting unit 12 updates the recorded content of the aggregation group information recording unit 14.

The aggregation group information recording unit 14 records the aggregation information. The aggregation information includes system identifiers, aggregation group identifiers, and port identifiers.

It should be noted that the system identifier, the aggregation group identifier, and the port identifier are well known identifiers defined in IEEE 802.1AX 5.4.2.2 LACPDU. The system identifier serves to identify the system including the switches 20a and 20b, and the server 10 which permits a request for the link aggregation. The aggregation group identifier serves to identify a group (aggregation group) of lines (physical links) for which a request for aggregation is permitted. The port identifier serves to identify a port relating to the aggregation group.

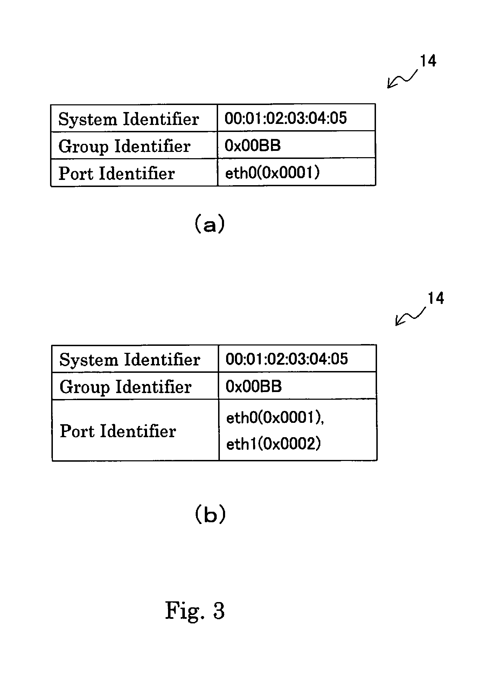

FIG. 3 is a diagram showing an example of the recorded content of the aggregation group information recording unit 14 according to the first embodiment. The aggregation group information recording unit 14 records a system identifier 00:01:02:03:04:05, an aggregation group identifier oxooBB, and a port identifier etho (0x0001) (refer to FIG. 3(a)), or the system identifier 00:01:02:03:04:05, the aggregation group identifier oxooBB, and port identifiers etho and eth1 (0x0001, 0x0002) (refer to FIG. 3(b)).

The example in FIG. 3(b) shows a configuration in which physical links relating to the two ports (port identifiers etho and ethi) of the server 10 are logically treated as one line (aggregation group). The identifier of this aggregation group is oxooBB. The identifier of the system (switches 20a and 20b) to which this aggregation group belongs is 00:01:02:03:04:05.

The communication data recording unit 18 records communication data. The communication data implies data communicated between the server 10 and the switch 20a or the switch 20b.

The communication control unit 16 records communication data received by the port etho and the port eth1 in the communication data recording unit 18. Moreover, the communication control unit 16 transmits communication data read out from the communication data recording unit 18 from the port etho or the port eth1.

When the communication control unit 16 transmits communication data, the communication control unit 16 refers to the recorded content of the aggregation group information recording unit 14, and then carries out the transmission. For example, if the port etho and the port eth1 belong to one aggregation group (refer to FIG. 3(b)), the communication data read out from the communication data recording unit 18 is divided, and is transmitted from the port etho and the port eth1. For example, it is conceivable that the communication control unit 16 transmits communication data read out from the communication data recording unit 18 sequentially from the port eth0, the port eth1, the port eth0, the port eth1, ...

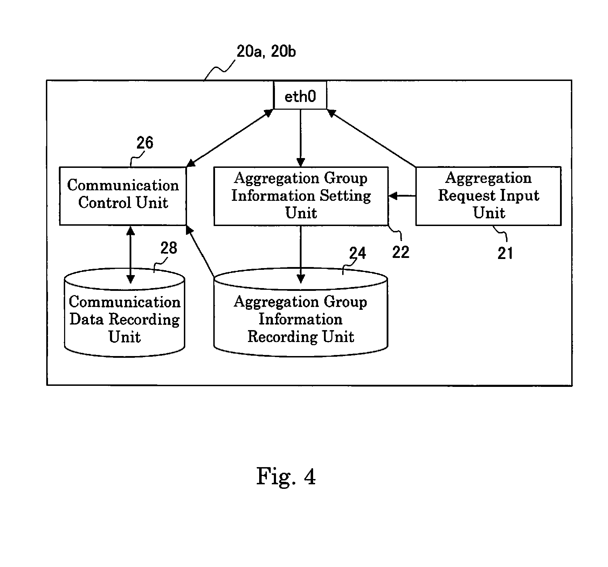

FIG. 4 is a functional block diagram showing a configuration of the switches 20a and 20b according to the first embodiment. Each of the switches 20a and 20b includes the port eth0, an aggregation request input unit 21, an aggregation group information setting unit 22, an aggregation group information recording unit 24, a communication control unit 26, and a communication data recording unit 28.

The aggregation request input unit 21 serves to receive an input of information for requesting the link aggregation.

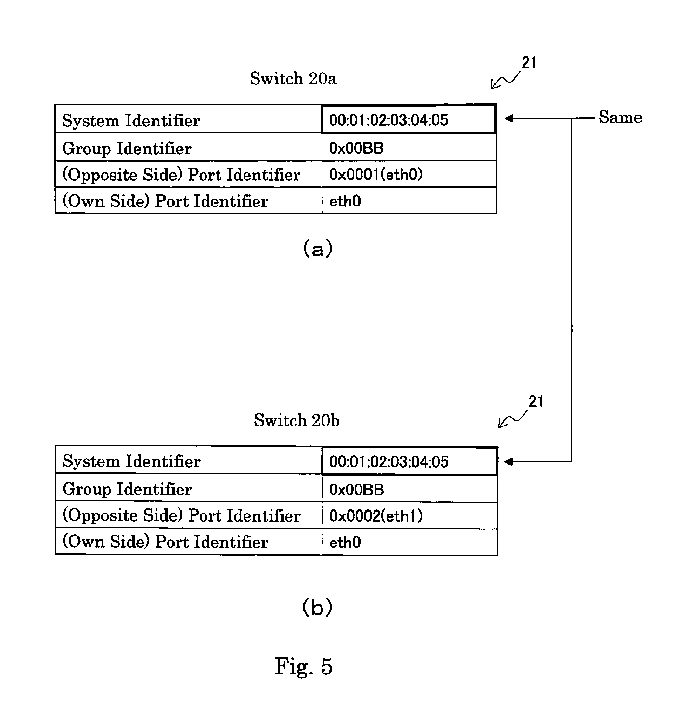

FIG. 5 is a diagram showing information input by the aggregation request input unit 21 of the switch 20a according to the first embodiment (refer to FIG. 5(a)), and information input by the aggregation request input unit 21 of the switch 20b according to the first embodiment (refer to FIG. 5(b)).

Referring to FIG. 5(a), the system identifier 00:01:02:03:04:05, the aggregation group identifier (sometimes simply referred to as "group identifier", hereinafter) oxooBB, the port identifier 0X0001 (representing the port etho of the server 10) on the opposite side (server 10 side), and the port identifier etho on the own side (switch 20a side) are input by the aggregation request input unit 21 of the switch 20a.

The system identifier 00:01:02:03:04:05, the aggregation group identifier oxooBB, and the port identifier 0X0001 on the opposite side (server 10 side) out of the information input by the aggregation request input unit 21 of the switch 20a are stored in an LACP frame, and are transmitted from the port etho to the server 10.

Moreover, the system identifier 00:01:02:03:04:05, the aggregation group identifier oxooBB, and the port identifier etho on the own side (switch 20a side) out of the information input by the aggregation request input unit 21 of the switch 20a are fed to the aggregation group information setting unit 22.

Referring to FIG. 5(b), the system identifier 00:01:02:03:04:05, the aggregation group identifier (sometimes simply referred to as "group identifier", hereinafter) oxooBB, the port identifier 0x0002 (representing the port eth1 of the server 10) on the opposite side (server 10 side), and the port identifier etho on the own side (switch 20b side) are input by the aggregation request input unit 21 of the switch 20b.

The system identifier 00:01:02:03:04:05, the aggregation group identifier oxooBB, and the port identifier 0x0002 on the opposite side (server 10 side) out of the information input by the aggregation request input unit 21 of the switch 20b are stored in an LACP frame, and are transmitted from the port etho to the server 10.

Moreover, the system identifier 00:01:02:03:04:05, the aggregation group identifier oxooBB, and the port identifier etho on the own side (switch 20b side) out of the information input by the aggregation request input unit 21 of the switch 20b are fed to the aggregation group information setting unit 22.

In the above description referring to FIG. 3, FIG. 5(a), and FIG. 5(b), the port identifiers 0X0001 and 0x0002 are described as the port identifiers on the opposite side (server 10 side). However, they are, in a strict sense, identifiers respectively assigned to the ports, which are the ports (etho of the switch 20a and etho of the switch 20b) connected to the links subject to the link aggregation, of the network devices (switches 20a and 20b) connected to the server 10. They can be confused with the (own) port identifiers eth0, and are thus, for the sake of description, described as the identifiers of the port etho and eth1 on the opposite side (server 10 side) corresponding, in one-to-one manner, to etho of the switch 20a and etho of the switch 20b. Similarly, 0X0001 and 0X0002, which are identifiers respectively assigned, in a strict sense, to etho of the switch 20a and etho of the switch 20b, are considered as the port identifiers 0X0001 and 0x0002 on the opposite side (server 10 side) in a description hereinafter.

The system identifier 00:01:02:03:04:05 of the LACP frame transmitted from the switch 20a and the system identifier 00:01:02:03:04:05 of the LACP frame transmitted from the switch 20b are the same.

According to the well-known LACP, the system identifier of an LACP frame transmitted from the switch 20a is defined based on the MAC address unique to the switch 20a.The system identifier of an LACP frame transmitted from the switch 20b is defined based on the MAC address unique to the switch 20b. Thus, according to the well-known LACP, the system identifier of an LACP frame transmitted from the switch 20a and the system identifier of an LACP frame transmitted from the switch 20b are originally different from each other. For these system identifiers different from each other, the link aggregation will not be permitted.

However, according to the embodiment of the present invention, the link aggregation is permitted by making the system identifier of an LACP frame transmitted from the switch 20a and the system identifier of an LACP frame transmitted from the switch 20b the same.

When the aggregation group information setting unit 22 receives a notification that an aggregation request via an LACP frame is permitted from the server 10, the aggregation group information setting unit 22 sets the aggregation information. In other words, the aggregation group information setting unit 22 updates the recorded content of the aggregation group information recording unit 24 to a content provided by the aggregation request input unit 21.

The aggregation group information recording unit 24 records the aggregation information. The aggregation information includes system identifiers, aggregation group identifiers, and port identifiers.

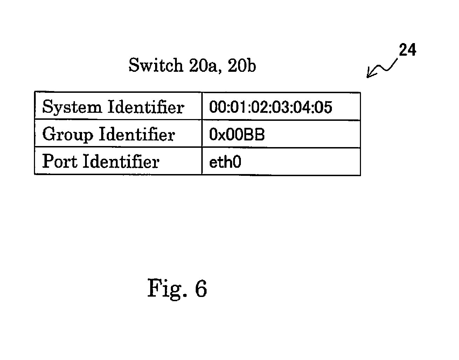

FIG. 6 is a diagram showing an example of the recorded content of the aggregation group information recording unit 24 according to the first embodiment. The recorded content of the aggregation group information recording unit 24 includes the system identifier 00:01:02:03:04:05, the aggregation group identifier oxooBB, and the port identifier etho both for the switches 20a and 20b. This recorded content corresponds to the system identifier 00:01:02:03:04:05, the aggregation group identifier oxooBB, and the port identifier etho on the own side (switch 20a side and switch 20b side) in FIG. 5(a) and FIG. 5(b).

The communication data recording unit 28 records communication data.

The communication control unit 26 records communication data received by the port etho in the communication data recording unit 28. Moreover, the communication control unit 26 transmits communication data read out from the communication data recording unit 28 from the port etho.

When the communication control unit 26 transmits communication data, the communication control unit 26 refers to the recorded content of the aggregation group information recording unit 24, and then carries out the transmission. For example, if only the port etho belongs to one aggregation group (refer to FIG. 6), communication data read out from the communication data recording unit 28 is transmitted only from the port etho.

A description will now be given of an operation of the first embodiment of the present invention.

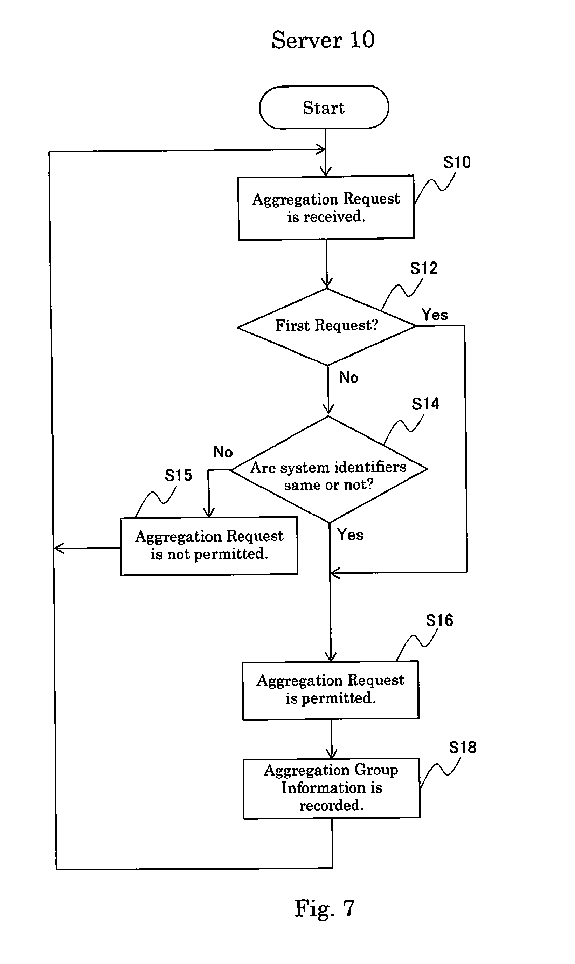

FIG. 7 is a flowchart showing an operation of the server 10 according to the first embodiment.

First, the aggregation group information setting unit 12 receives a request for the link aggregation via an LACP frame from the port etho or the port eth1 (S10).

The aggregation group information setting unit 12 determines whether this link aggregation request is a first request relating to an aggregation group relating to the request or not (S12). A group identifier is stored in the LACP frame, and the aggregation group information setting unit 12 determines whether the group identifier is recorded in the aggregation group information recording unit 14 or not.

If the group identifier stored in the LACP frame is not recorded in the aggregation group information recording unit 14, the request is a first request. Conversely, if the group identifier stored in the LACP frame is recorded in the aggregation group information recording unit 14, the request is not a first request.

If the request is a first request (Yes in S12), the aggregation group information setting unit 12 permits the aggregation request (S16). The permission of the aggregation request is transmitted from the aggregation group information setting unit 12 via the port via which the LACP frame has received to the switch 20a or the switch 20b.

Further, the aggregation group information setting unit 12 records aggregation information in the aggregation group information recording unit 14 (S18). The operation of the server 10 returns to the reception of a request for the link aggregation (S10).

If the request is not a first request (No in S12), the aggregation group information setting unit 12 determines whether the system identifier relating to the request and a system identifier (this system identifier should correspond to the group identifier relating to the request) recorded in the aggregation group information recording unit 14 are the same or not (S14). The system identifier is stored in the LACP frame, and the aggregation group information setting unit 12 determines whether this system identifier is recorded in the aggregation group information recording unit 14 or not.

If the system identifier stored in the LACP frame is not recorded in the aggregation group information recording unit 14 (No in S14), the aggregation group information setting unit 12 does not permit the aggregation request (S15). The rejection of the aggregation request is transmitted from the aggregation group information setting unit 12 via the port via which the LACP frame has received to the switch 20a or the switch 20b. The operation of the server 10 returns to the reception of a request for the link aggregation (S10).

If the system identifier stored in the LACP frame is recorded in the aggregation group information recording unit 14 (Yes in S14), the aggregation group information setting unit 12 permits the aggregation request (S16). The permission of the aggregation request is transmitted from the aggregation group information setting unit 12 via the port via which the LACP frame has received to the switch 20a or the switch 20b.

Further, the aggregation group information setting unit 12 records aggregation information in the aggregation group information recording unit 14 (S18). The operation of the server 10 returns to the reception of a request for the link aggregation (S10).

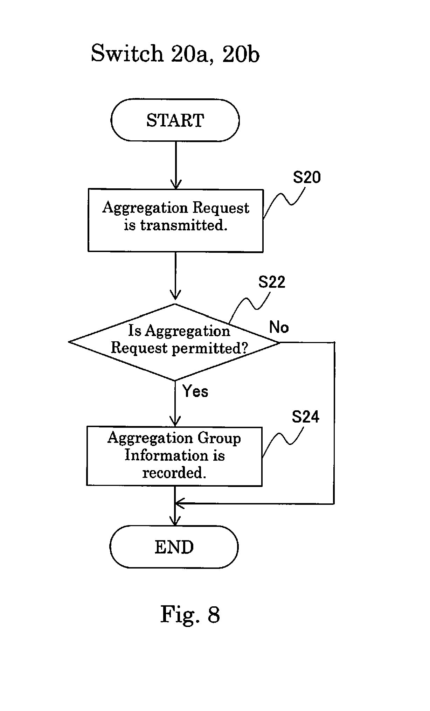

FIG. 8 is a flowchart showing an operation of the switch 20a and the switch 20b according to the first embodiment.

First, the aggregation request input unit 21 receives an input of information for requesting the link aggregation. A system identifier, an aggregation group identifier, and a port identifier of an opposite side (server 10 side) out of the input information are stored in an LACP frame, and are transmitted to the server 10 (S20).

The aggregation group information setting unit 22 determines whether a notification that an aggregation request via an LACP frame is permitted is transmitted from the server 10 or not (S22). If the notification that the aggregation request is permitted is transmitted (Yes in S22), the aggregation group information setting unit 22 records aggregation information in the aggregation group information recording unit 24 (S24). The aggregation information to be recorded out of the information input to the aggregation request input unit 21 includes the system identifier, the aggregation group identifier, and the port identifier on the own side (the switch 20a side or the switch 20b side).

If a notification that the aggregation request is not permitted is transmitted (No in S22), the aggregation group information setting unit 22 does not do anything in particular.

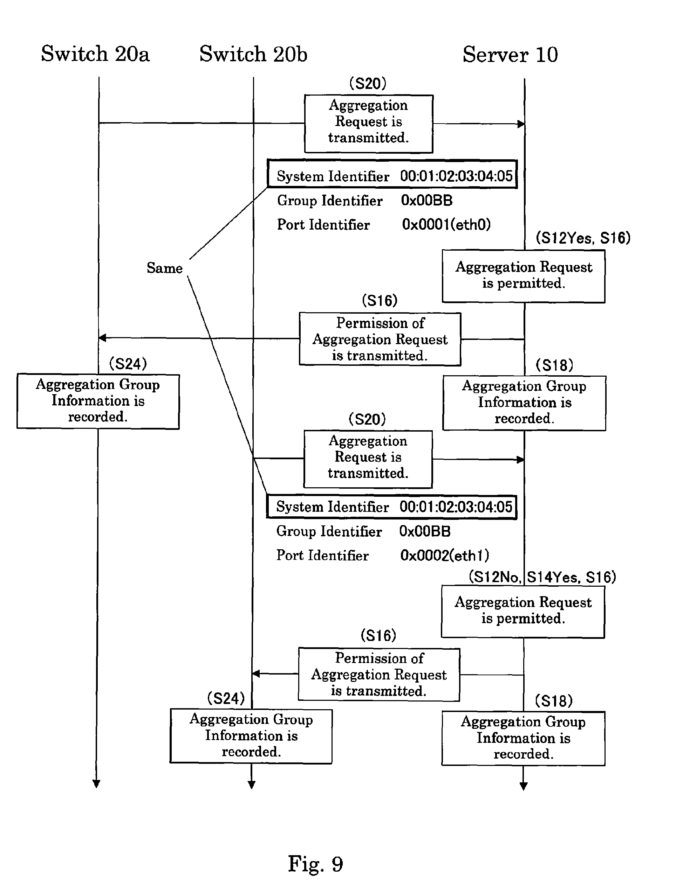

FIG. 9 is a chart showing flows of operations of the switch 20a, the switch 20b, and the server 10 according to the first embodiment.

First, information for requesting the link aggregation is input by the aggregation request input unit 21 of the switch 20a (refer to FIG. 5(a)). A system identifier, an aggregation group identifier, and a port identifier of the opposite side (server 10 side) out of the input information are stored in an LACP frame, and are transmitted to the server 10 (S20). The information transmitted to the server 10 as shown in FIG. 9 includes the system identifier 00:01:02:03:04:05, the aggregation group identifier oxooBB, and the port identifier 0X0001 (corresponding to etho) on the opposite side (server 10 side).

The aggregation group information setting unit 12 of the server 10 receives the aggregation request from the port etho. On this occasion, none is recorded in the aggregation group information recording unit 14, and the group identifier oxooBB transmitted from the switch 20a is not recorded. Thus, the aggregation group information setting unit 12 determines that the aggregation request from the switch 20a is a first request (Yes in S12), and thus permits the aggregation request (S16). The permission of the aggregation request is transmitted from the aggregation group information setting unit 12 via the port etho to the switch 20a.Then, the aggregation group information setting unit 12 records aggregation information in the aggregation group information recording unit 14 (S18). The aggregation information to be recorded corresponds to the information transmitted from the switch 20a, and is as shown in FIG. 3(a).

The aggregation group information setting unit 22 of the switch 20a confirms that the notification that the aggregation request is permitted has been transmitted from the server 10, and records aggregation information in the aggregation group information recording unit 24 (S24). The aggregation information recorded in the aggregation group information recording unit 24 is as shown in FIG. 6.

Then, information for requesting the link aggregation is input by the aggregation request input unit 21 of the switch 20b (refer to FIG. 5(b)). A system identifier, an aggregation group identifier, and a port identifier of the opposite side (server 10 side) out of the input information are stored in an LACP frame, and are transmitted to the server 10 (S20). The information transmitted to the server 10 as shown in FIG. 9 includes the system identifier 00:01:02:03:04:05, the aggregation group identifier oxooBB, and the port identifier 0x0002 (corresponding to ethi) on the opposite side (server 10 side).

The aggregation group information setting unit 12 of the server 10 receives the aggregation request from the port eth1. On this occasion, the group identifier oxooBB is recorded in the aggregation group information recording unit 14 as shown in FIG. 3(a). On the other hand, the information transmitted from the switch 20b also includes the group identifier oxooBB. Thus, the aggregation group information setting unit 12 determines that the aggregation request from the switch 20a is not a first request (No in S12), and determines whether the system identifier is the same or not (S14). Then, the system identifier 00:01:02:03:04:05 associated with the group identifier oxooBB is recorded in the aggregation group information recording unit 14 as shown in FIG. 3(a). On the other hand, the information transmitted from the switch 20b also includes the system identifier 00:01:02:03:04:05. Thus, the aggregation group information setting unit 12 determines that the system identifier is the same (Yes in S14) and permits the aggregation request (S16). The permission of the aggregation request is transmitted from the aggregation group information setting unit 12 via the port eth1 to the switch 20b. Then, the aggregation group information setting unit 12 records aggregation information in the aggregation group information recording unit 14 (S18). The port identifier eth1 transmitted from the switch 20b is added to the recorded content of the aggregation group information recording unit 14, and the recorded content is thus as shown in FIG. 3(b).

The aggregation group information setting unit 22 of the switch 20b confirms that the notification that the aggregation request is permitted has been transmitted from the server 10, and records aggregation information in the aggregation group information recording unit 24 (S24). The aggregation information recorded in the aggregation group information recording unit 24 is as shown in FIG. 6.

According to the well-known LACP, the system identifier of an LACP frame transmitted from the switch 20a and the system identifier of an LACP frame transmitted from the switch 20b are originally different from each other. Thus, the link aggregation cannot be originally applied to the port etho connected to the switch 20a and the port eth1 connected to the switch 20b.

However, according to the first embodiment, the system identifier of an LACP frame transmitted from the switch 20a and the system identifier of an LACP frame transmitted from the switch 20b are made the same.

As a result, even if both of two network devices (switches 20a and 20b) are connected to another network device (server 10), the link aggregation can be carried out on the server 10.

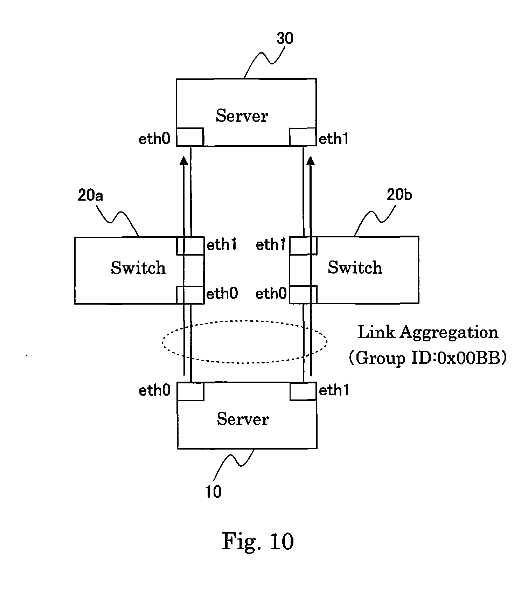

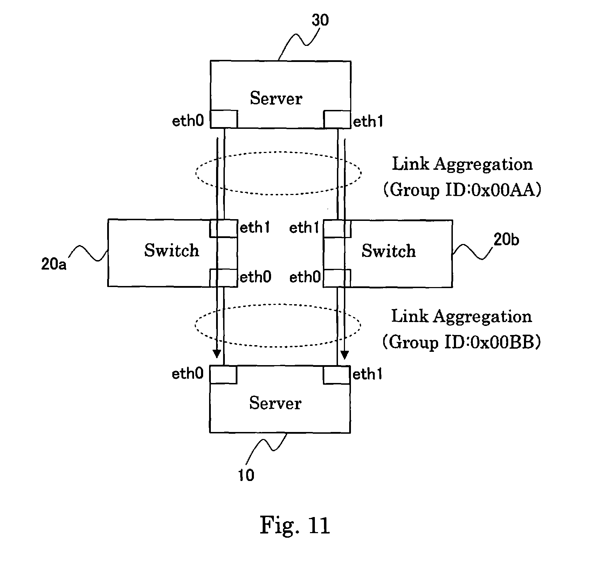

A description will now be given of an example of an effect brought about by the link aggregation carried out on the server 10. FIG. 10 is a diagram showing a network configuration in which a server 30 is added to the server 10 and the switches 20a and 20b. It should be noted that flows of data to be transmitted are represented by solid arrows (and in FIG. 11 to FIG. 14 as well).

A port eth1 of the switch 20a is connected to a port etho of the server 30. A port eth1 of the switch 20b is connected to a port eth1 of the server 30. On this occasion, if data is transmitted from the server 10 to the server 30, and the link aggregation is available, the data to be transmitted can be divided into data via the switch 20a and data via the switch 20b. As a result, the data transmission can be carried out at a high speed, and even if the switch 20a or the switch 20b fails, the data transmission can be carried out.

### Second Embodiment

The switches 20a and 20b according to the second embodiment are different from those of the first embodiment in that each of the switches 20a and 20b has a bypass port eth3.

Before a description will be given of the switches 20a and 20b according to the second embodiment, a description will now be given of necessity of the bypass port eth3.

FIG. 11 is a diagram showing a case in which the link aggregation (group identifier: oxooAA) is also permitted on the server 30 in the network configuration shown in FIG. 10. The server 30 has the same configuration as that of the server 10, and the link aggregation can be permitted on the server 30 as on the server 10. Then, if data is transmitted from the server 30 to the server 10, the data to be transmitted can be divided into data via the switch 20a and data via the switch 20b.

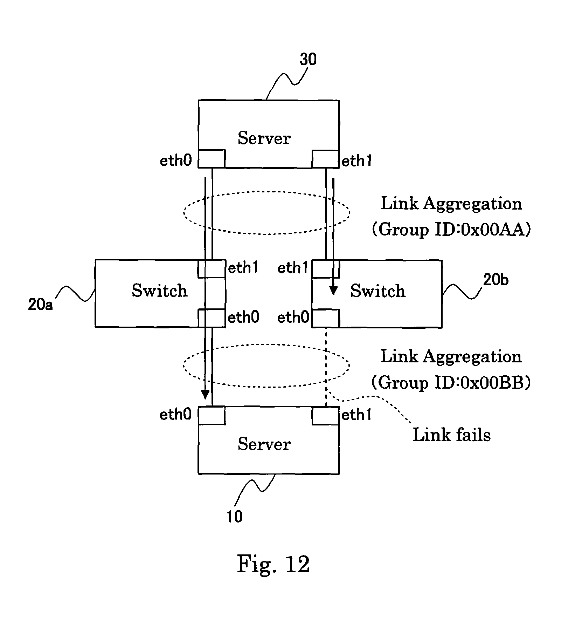

FIG. 12 is a drawing showing a case in which a physical link connecting the port etho of the switch 20b and the port eth1 of the server 10 fails in the network configuration shown in FIG. 11. Data cannot be transmitted from the server 30 via the switch 20b to the server 10, and there poses a problem that a part of data to be transmitted from the server 30 to the server 10 cannot be transmitted.

Then, the bypass ports eth3 according to the second embodiment of the present invention become necessary.

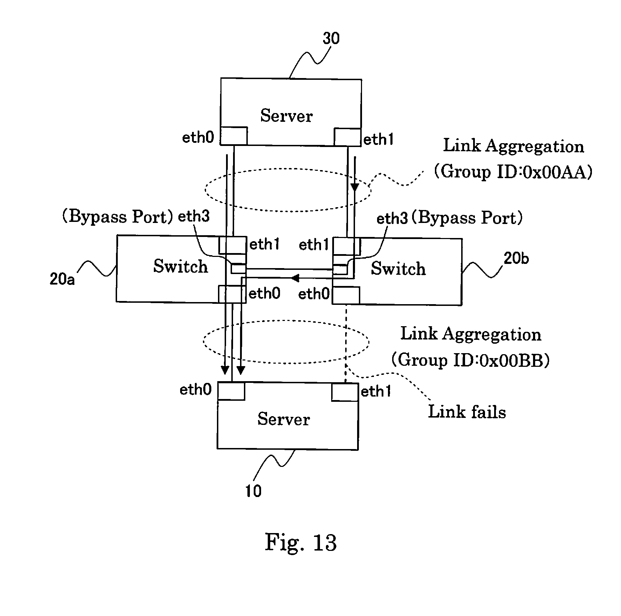

FIG. 13 is a diagram showing a network configuration of the switches 20a and 20b according to the second embodiment of the present invention (when a physical link fails). Both the switch 20a and the switch 20b according to the second embodiment have the bypass ports eth3. The bypass port eth3 of the switch 20a is connected to the bypass port eth3 of the switch 20b.

The data transmitted from the server 30 via the switch 20b to the server 10 is transmitted, in place of the physical link connecting the port etho of the switch 20b and the port eth1 of the server 10 with each other, via a physical link connecting the bypass ports eth3 with each other, further via the switch 20a to the server 10.

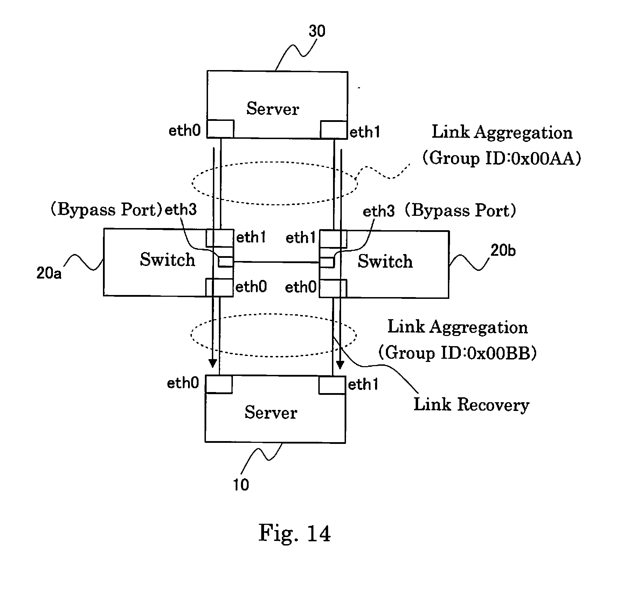

FIG. 14 is a diagram showing a network configuration of the switches 20a and 20b according to the second embodiment of the present invention (when the failed physical link is recovered).

When the physical link connecting the port etho of the switch 20b and the port eth1 of the server 10 with each other recovers from the failure, the use of the physical link connecting the bypass ports eth3 with each other is stopped. The data to be transmitted from the server 30 via the switch 20b to the server 10 is transmitted via the physical link connecting the port etho of the switch 20b and the port eth1 of the server 10 with each other to the server 10.

The configuration of the server 10 according to the second embodiment of the present invention is the same as that of the first embodiment, and hence description thereof is omitted.

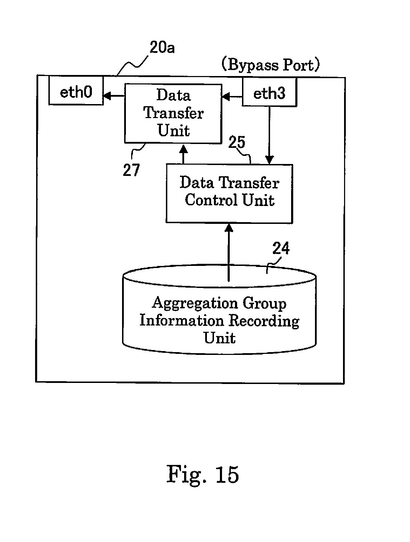

FIG. 15 is a functional block diagram showing a configuration of the switch 20a according to the second embodiment of the present invention. It should be noted that the same portions as those of the first embodiment (refer to FIG. 4) are not illustrated except for the port etho and the aggregation group information recording unit 24.

The switch 20a according to the second embodiment includes the bypass port eth3, a data transfer control unit 25, and a data transfer unit 27 in addition to the switch 20a according to the first embodiment.

The data transfer control unit 25 receives determination that a failure is present from the bypass port eth3. In other words, the data transfer control unit 25 receives information that the physical link (physical link connecting the port etho of the switch 20b and the port eth1 of the server 10) is failed along with the group identifier oxooBB of the aggregation group to which the failed physical link belongs from the switch 20b.

The data transfer control unit 25 further reads the port identifier etho included in the aggregation information (refer to FIG. 6) including the group identifier oxooBB of the aggregation group to which the failed physical link belongs from the aggregation group information recording unit 24. Then, the data transfer control unit 25 causes the data transfer unit 27 to transfer communication data received by the bypass port eth3 to the port etho represented by the port identifier included in the aggregation information.

The data transfer unit 27 undergoes the above-mentioned control by the data transfer control unit 25, and thus transfers the communication data received by the bypass port eth3 to the port etho represented by the port identifier included in the aggregation information. This transfer can be implemented as flooding.

On this occasion, a description is also given of a function when the physical link relating to the port etho recovers from a failure.

In this case, the data transfer control unit 25 receives determination that a failure is absent from the bypass port eth3, and causes the data transfer unit 27 to stop the transfer of the communication data (transfer from the bypass port eth3 to the port etho).

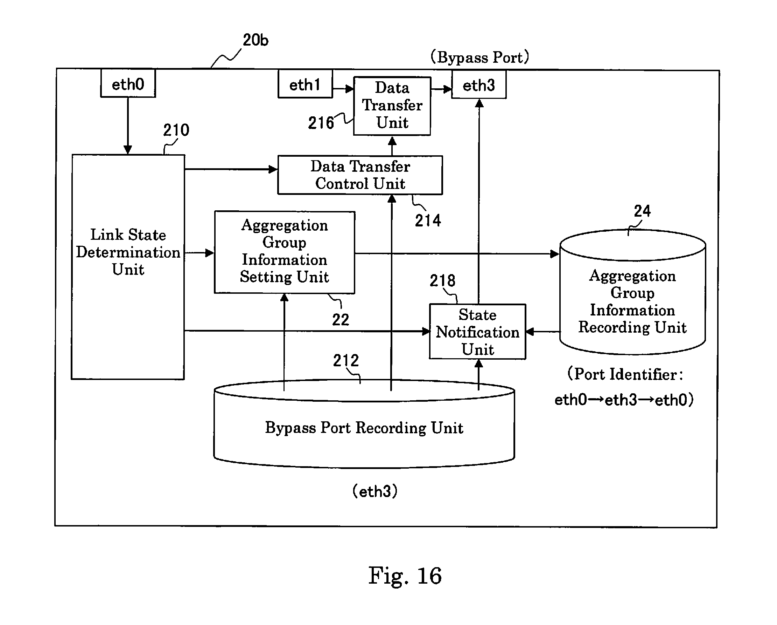

FIG. 16 is a functional block diagram showing a configuration of the switch 20b according to the second embodiment of the present invention. It should be noted that the same portions as those of the first embodiment (refer to FIG. 4) are not illustrated except for the port eth0, the aggregation group information setting unit 22, and the aggregation group information recording unit 24.

The switch 20b according to the second embodiment includes the bypass port eth3, a link state determination unit 210, a bypass port recording unit 212, a data transfer control unit 214, a data transfer unit 216, and a state notification unit 218 in addition to the switch 20b according to the first embodiment.

The link state determination unit 210 determines whether a failure is present or absent on the link to which the port etho represented by the port identifier included in the aggregation information (refer to FIG. 6) recorded in the aggregation group information recording unit 24 is connected.

The bypass port recording unit 212 records the identifier eth3 of the bypass port.

If the link state determination unit 210 determines presence of a failure on the physical link relating to the port eth0, the data transfer control unit 214 causes the data transfer unit 216 to transfer communication data received by all ports (port ethi) other than the failed port etho and the bypass port eth3 to the bypass port eth3. It should be noted that the failed port is a port connected to a link which is determined to be failed by the link state determination unit 210.

The data transfer unit 216 undergoes the above-described control by the data transfer control unit 214, and transfers the communication data received by all the ports other than the failed port etho and the bypass port eth3 to the bypass port eth3. This transfer can be implemented as flooding.

The state notification unit 218 receives the determination of the presence of the failure made by the link state determination unit 210. Then, the state notification unit 218 reads the configuration that the bypass port is the port eth3 from the bypass port recording unit 212. Further, the state notification unit 218 reads, from the aggregation group information recording unit 24, the group identifier oxooBB of the aggregation group to which the port etho relating to the physical link determined to be failed belongs (refer to FIG. 6). Then, the state notification unit 218 transmits the determination of the presence of a failure made by the link state determination unit 210 along with the group identifier oxooBB from the bypass port eth3.

It should be noted that the aggregation information setting unit 22 deletes the port identifier etho representing the failed port from the aggregation information (refer to FIG. 6) recorded in the aggregation group information recording unit 24, and adds the port identifier eth3 representing the bypass port.

On this occasion, a description is also given of a function when the physical link relating to the port etho recovers from a failure.

If the link state determination unit 210 determines presence of a failure, and then determines absence of the failure (namely, a physical link recovers from the failure), the data transfer control unit 214 receives the state from the link state determination unit 210, and causes the data transfer unit 216 to stop the transfer of communication data.

The state notification unit 218 receives the determination of the absence of the failure made by the link state determination unit 210. Then, the state notification unit 218 reads the configuration that the bypass port is the port eth3 from the bypass port recording unit 212. Further, the state notification unit 218 reads, from the aggregation group information recording unit 24, the group identifier oxooBB of the aggregation group to which the port etho relating to the physical link determined not to be failed belongs (refer to FIG. 6). Then, the state notification unit 218 transmits the determination of the absence of a failure made by the link state determination unit 210 along with the group identifier oxooBB from the bypass port eth3.

It should be noted that the aggregation information setting unit 22 deletes the port identifier eth3 representing the bypass port from the aggregation information recorded in the aggregation group information recording unit 24, and adds the port identifier eth0 representing the failed port. As a result, the aggregation information returns to the information shown in FIG. 6.

A description will now be given of an operation of the second embodiment of the present invention.

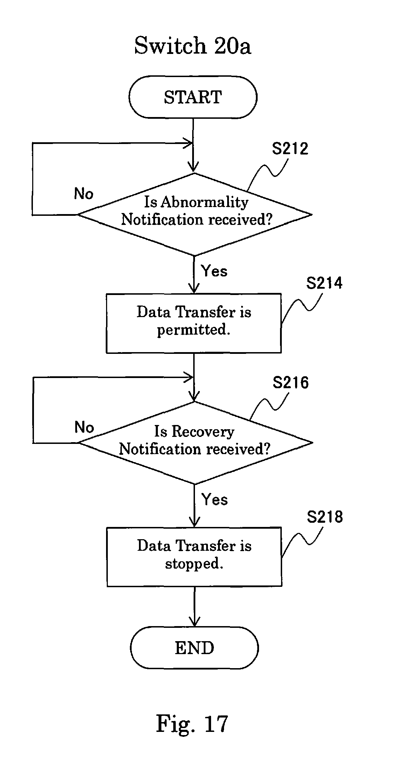

FIG. 17 is a flowchart showing an operation of the switch 20a according to the second embodiment.

First, the data transfer control unit 25 determines whether an abnormality notification that a physical link is failed is received from the bypass port eth3 or not (S212). If an abnormality notification is not received (No in S212), the data transfer control unit 25 waits until the reception thereof.

If an abnormality notification is received (Yes in S212), the data transfer control unit 25 permits the data transfer unit 27 to transfer data (S214). In other words, the data transfer control unit 25 causes the data transfer unit 27 to transfer communication data received by the bypass port eth3 to the port etho.

Then, the data transfer control unit 25 determines whether a recovery notification that a physical link is not failed is received from the bypass port eth3 or not (S216). If a recovery notification is not received (No in S216), the data transfer control unit 25 waits until the reception thereof.

If a recovery notification is received (Yes in S216), the data transfer control unit 25 causes the data transfer unit 27 to stop the data transfer (S218). In other words, the data transfer control unit 25 causes the data transfer unit 27 not to transfer communication data received by the bypass port eth3 to the port etho.

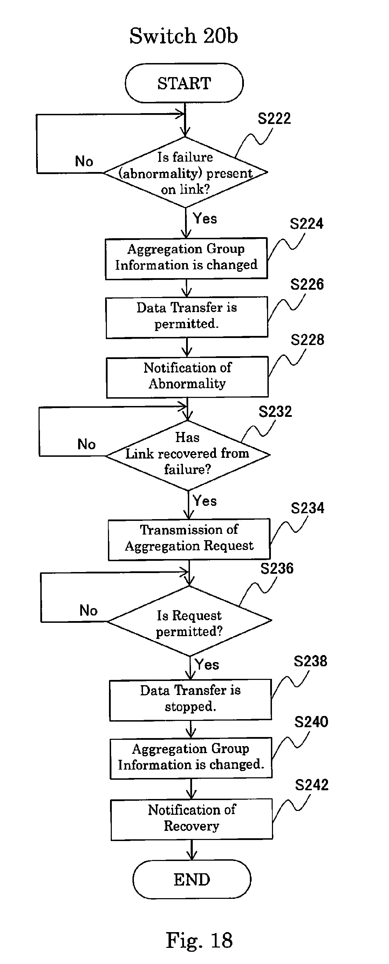

FIG. 18 is a flowchart showing an operation of the switch 20b according to the second embodiment.

First, the link state determination unit 210 determines whether a failure (abnormality) is present on the link to which the port etho is connected or not (S222). If there is not abnormality (No in S222), the link state determination unit 210 waits until an occurrence of abnormality.

If the link state determination unit 210 detects a failure (abnormality) of the link (Yes in S222), the aggregation information setting unit 22 changes the aggregation group information (S224). In other words, the aggregation information setting unit 22 deletes the port identifier etho representing the failed port from the aggregation information (refer to FIG. 6) recorded in the aggregation group information recording unit 24, and adds the port identifier eth3 representing the bypass port.

Further, the data transfer control unit 214 permits the data transfer unit 216 to transfer data (S226). In other words, the data transfer control unit 214 causes the data transfer unit 216 to transfer the communication data received by all the ports eth1 other than the failed port etho and the bypass port eth3 to the bypass port eth3.

Moreover, the state notification unit 218 transmits the determination of the presence of a failure made by the link state determination unit 210 along with the group identifier oxooBB from the bypass port eth3, thereby notifying the switch 20a of the presence of the abnormality on the link (S228).

On this occasion, the link state determination unit 210 determines whether the failure on the link is not present (the link has recovered from the failure) or not (S232). If the failure of the link is present (No in S232), the link state determination unit 210 waits until determination that the link is not failed (namely, the link has recovered from the failure) is made. If the link state determination unit 210 determines that the link has recovered from the failure (Yes in S232), the transmission of the aggregation request to the server 10 is carried out (S234). The transmission of the aggregation request (S234) is the same as that of the first embodiment, and a description thereof is therefore omitted (refer to S20 in FIG. 8).

Then, whether the permission for the aggregation request is received from the server 10 or not is determined (S236). If the permission is not received (No in S236), the permission is waited for until reception. When the permission for the aggregation request is received from the server 10 (Yes in S236), the data transfer control unit 214 causes the data transfer unit 216 to stop the transfer of the communication data (S238).

Further, the aggregation information setting unit 22 deletes the port identifier eth3 representing the bypass port from the aggregation information recorded in the aggregation group information recording unit 24, and adds the port identifier etho representing the failed port (S240). As a result, the aggregation information returns to the information shown in FIG. 6.

Moreover, the state notification unit 218 transmits the determination of the absence of a failure made by the link state determination unit 210 along with the group identifier oxooBB from the bypass port eth3, thereby notifying the switch 20a of the absence of a failure on the link (recovery from the failure) (S242).

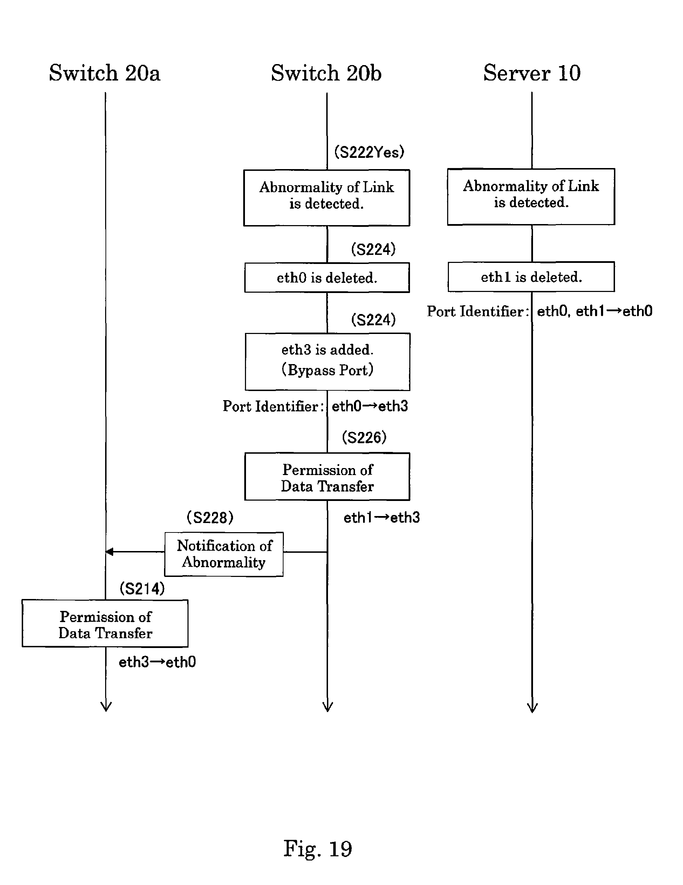

FIG. 19 is a flowchart showing operations of the switch 20a, the switch 20b, and the server 10 according to the second embodiment (when a failure occurs on the physical link).

First, the link state determination unit 210 of the switch 20b detects a failure (abnormality) of the link to which the port etho is connected (Yes in S222). Then, the aggregation information setting unit 22 deletes the port identifier etho representing the failed port from the aggregation information (refer to FIG. 6) recorded in the aggregation group information recording unit 24 (S224), and moreover adds the port identifier eth3 representing the bypass port (S224). Further, the data transfer control unit 214 permits the data transfer unit 216 to transfer data (from the port eth1 to the bypass port eth3) (S226). Moreover, the state notification unit 218 transmits the determination of the presence of a failure made by the link state determination unit 210 along with the group identifier oxooBB from the bypass port eth3, thereby notifying the switch 20a of the presence of the abnormality on the link (S228).

When the data transfer control unit 25 of the switch 20a receives the abnormality notification, the data transfer control unit 25 permits the data transfer unit 27 to transfer data (from the bypass port eth3 to the port etho) (S214).

When the server 10 detects an abnormality of the link, the server 10 deletes the port eth1 connected to the link from the aggregation information (refer to FIG. 3(b)) recorded in the aggregation group information recording unit 14. The aggregation information after the deletion is brought into the state shown in FIG. 3(a).

As a result of this configuration, as shown in FIG. 13, the data to be transmitted from the server 30 via the switch 20b to the server 10 is transmitted, in place of the physical link (failed) connecting the port etho of the switch 20b and the port eth1 of the server 10 with each other, via the physical link connecting the bypass ports eth3 with each other, further via the switch 20a to the server 10.

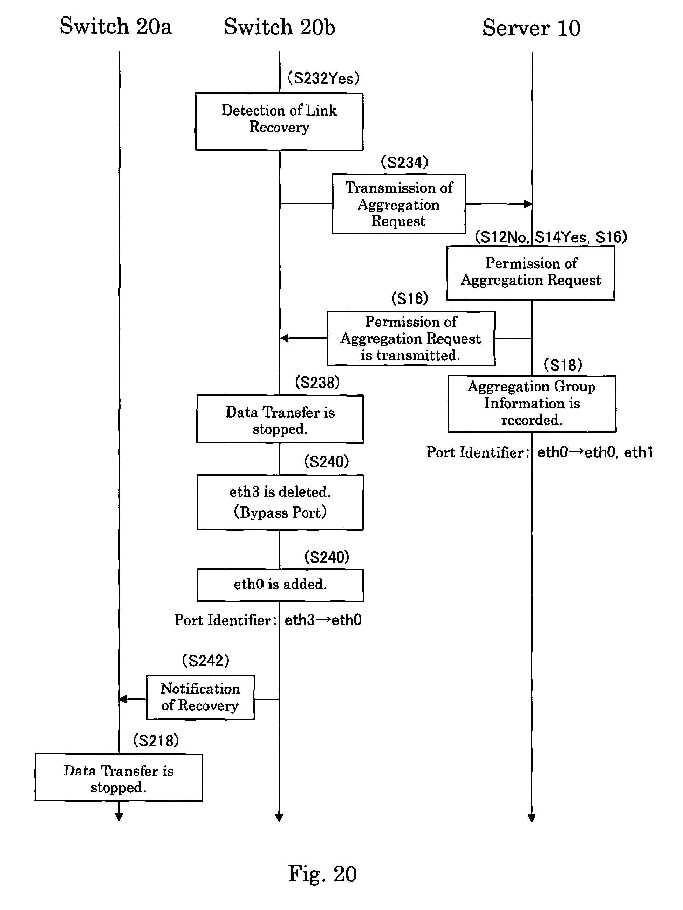

FIG. 20 is a flowchart showing operations of the switch 20a, the switch 20b, and the server 10 according to the second embodiment (when the physical link recovers from a failure).

The link state determination unit 210 of the switch 20b detects that the link has recovered from a failure in the state in which the data communication is carried out via the physical link connecting the bypass ports eth3 with each other as shown in FIG. 13 (Yes in S232).

Then, an aggregation request is transmitted from the switch 20b to the server 10 (S234) (as in S20 in FIG. 8). It should be noted that information included in the aggregation request is the same as the content (the system identifier 00:01:02:03:04:05, the aggregation group identifier oxooBB, and the port identifier 0x0002 (corresponding to eth1) on the opposite side (server 10 side)) of the transmission of the aggregation request from the switch 20b to the server 10 shown in FIG. 9.

The server 10 permits the aggregation request (No in S12 → Yes in S14 → S16 in FIG. 7). In other words, the group identifier oxooBB included in the aggregation request is also recorded in the aggregation group information recording unit 14, and is thus not a first request (No in S12). Moreover, the system identifier 00:01:02:03:04:05 included in the aggregation request is also recorded in the aggregation group information recording unit 14, and the system identifiers are the same (Yes in S14). Then, the aggregation request is permitted (S16).

Then, the server 10 transmits permission for the aggregation request (similarly to S16 in FIG. 7). Further, the server 10 records the aggregation group information (similarly to S18 in FIG. 7). In other words, the server 10 adds the port identifier eth1 to the aggregation group information as shown in FIG. 3(a), thereby obtaining the aggregation group information as shown in FIG. 3(b).

When the switch 20b receives permission for the aggregation request from the server 10, the data transfer control unit 214 causes the data transfer unit 216 to stop the data transfer (from the port eth1 to the bypass port eth3) (S238).

Further, the aggregation information setting unit 22 of the switch 20b deletes the port identifier eth3 representing the bypass port from the aggregation information recorded in the aggregation group information recording unit 24 (S240), and, moreover, adds the port identifier etho representing the failed port (S240). As a result, the aggregation information returns to the information shown in FIG. 6.

Moreover, the state notification unit 218 transmits the determination of the absence of a failure made by the link state determination unit 210 along with the group identifier oxooBB from the bypass port eth3, thereby notifying the switch 20a of a recovery of the link (S242).

The switch 20a receives the recovery notification, and the data transfer control unit 25 stops the data transfer (from the bypass port eth3 to the port etho) by the data transfer unit 27 (S218).

As a result of this configuration, the data to be transmitted from the server 30 via the switch 20b to the server 10 is transmitted via the physical link connecting the port etho of the switch 20b and the port eth1 of the server 10 with each other to the server 10 as shown in FIG. 14.

According to the second embodiment, even if the link between the switch 20b and the server 10 fails, the bypass ports eth3 enable the data transfer to the server 10.

### Third Embodiment

The switches 20a and 20b according to the third embodiment are different from those of the second embodiment in that the switches 20a and 20b include multiple bypass ports eth3 and eth4. In the following section, like components are denoted by like numerals as of the second embodiment, and will be explained in no more details.

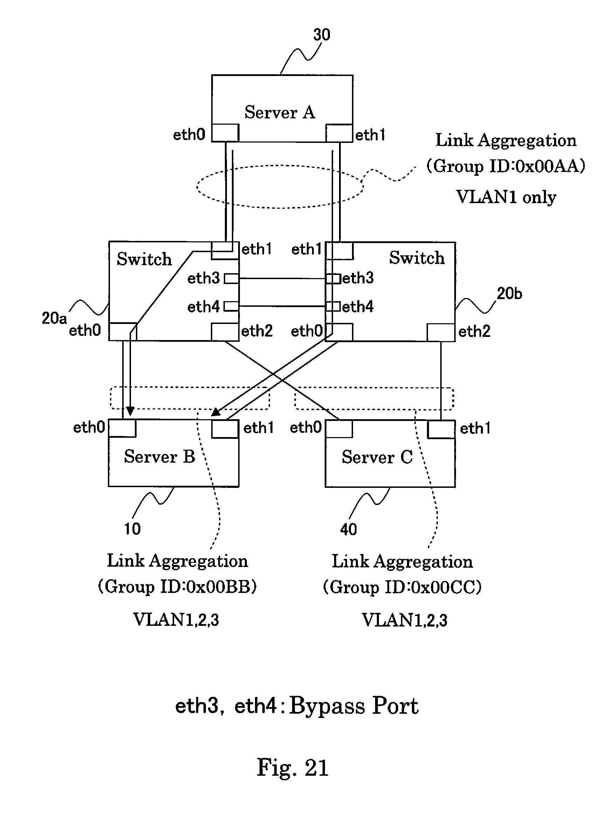

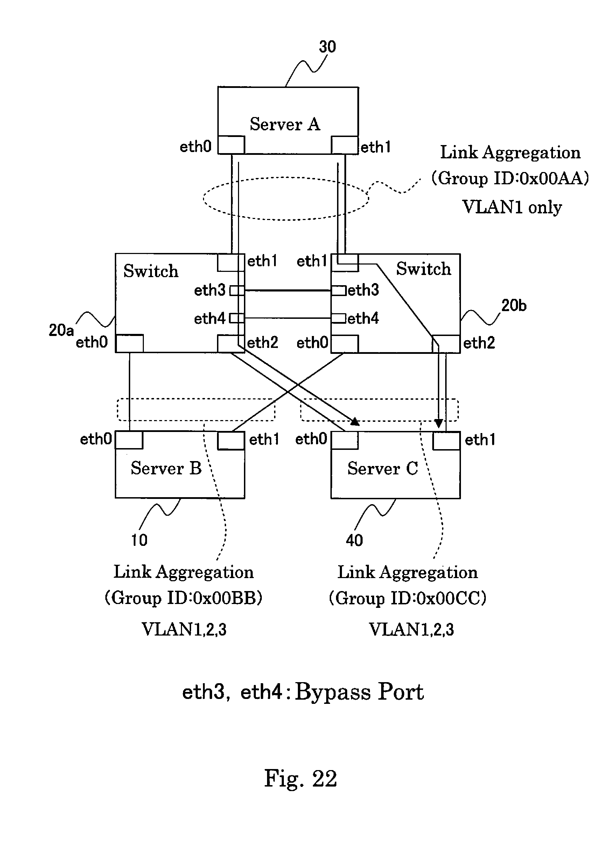

FIG. 21 is a diagram showing a network configuration of the switches 20a and 20b according to the third embodiment of the present invention (in a case in which data is transmitted from the server 30(A) to the server 10(B)). FIG. 22 is a diagram showing a network configuration of the switches 20a and 20b according to the third embodiment of the present invention (in a case in which data is transmitted from the server 30(A) to the server 40(C)).

A port eth2 of the switch 20a is connected to a port etho of the server 40(C). A port eth2 of the switch 20b is connected to a port eth1 of the server 40(C).

In FIGS. 21 and 22, link aggregation (group identifier: oxooAA) is permitted on the server 30(A), link aggregation (group identifier: oxooBB) is permitted on the server 10(B), and link aggregation (group identifier: oxooCC) is permitted on the server 40(C). The server 30 and the server 40 have the same configuration as that of the server 10, and the link aggregation can be permitted on the server 30 and the server 40 as on the server 10.

Then, if data is transmitted from the server 30(A) to the server 10(B) and the server 40(C), the data to be transmitted can be divided into data via the switch 20a and data via the switch 20b.

For example, referring to FIG. 21, the data transmitted from the port etho of the server 30(A) is fed via the port eth1 and the port etho of the switch 20a to the port etho of the server 10(B). The data transmitted from the port eth1 of the server 30(A) is fed via the port eth1 and the port etho of the switch 20b to the port eth1 of the server 10(B).

For example, referring to FIG. 22, the data transmitted from the port etho of the server 30(A) is fed via the port eth1 and the port eth2 of the switch 20a to the port etho of the server 40(C). The data transmitted from the port eth1 of the server 30(A) is fed via the port eth1 and the port eth2 of the switch 20b to the port eth1 of the server 40(C).

It should be noted that the aggregation group oxooAA (link aggregation having a group identifier oxooAA) belongs only to VLAN1. The aggregation groups oxooBB and oxooCC belong to VLAN1, VLAN2, and VLAN3. A description will later be given of the VLAN (Virtual LAN).

Both the switch 20a and the switch 20b according to the third embodiment have the bypass ports eth3 and eth4. The bypass port eth3 of the switch 20a is connected to the bypass port eth3 of the switch 20b. The bypass port eth4 of the switch 20a is connected to the bypass port eth4 of the switch 20b.

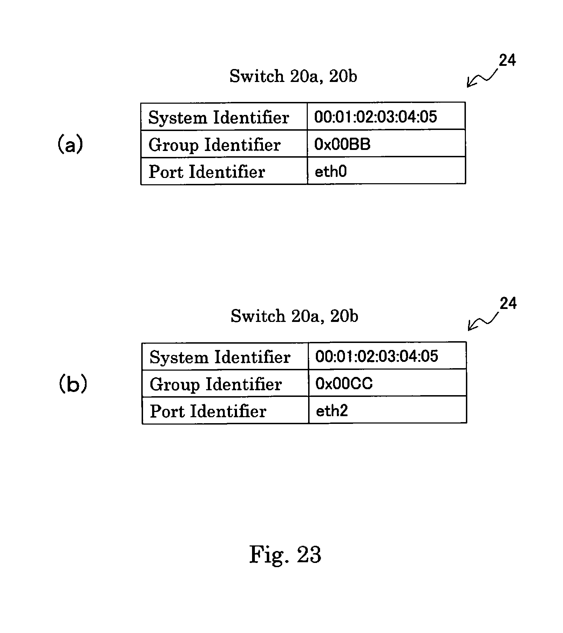

FIG. 23 is a diagram showing an example of the recorded content of the aggregation group information recording unit 24 according to the third embodiment. The recorded content of the aggregation group information recording unit 24 both for the switches 20a and 20b include, for the aggregation group identifier oxooBB, the system identifier 00:01:02:03:04:05, the aggregation group identifier oxooBB, and the port identifier etho (refer to FIG. 23(a)), and, for the aggregation group identifier oxooCC, the system identifier 00:01:02:03:04:05, the aggregation group identifier oxooCC, and the port identifier eth2 (refer to FIG. 23(b)).

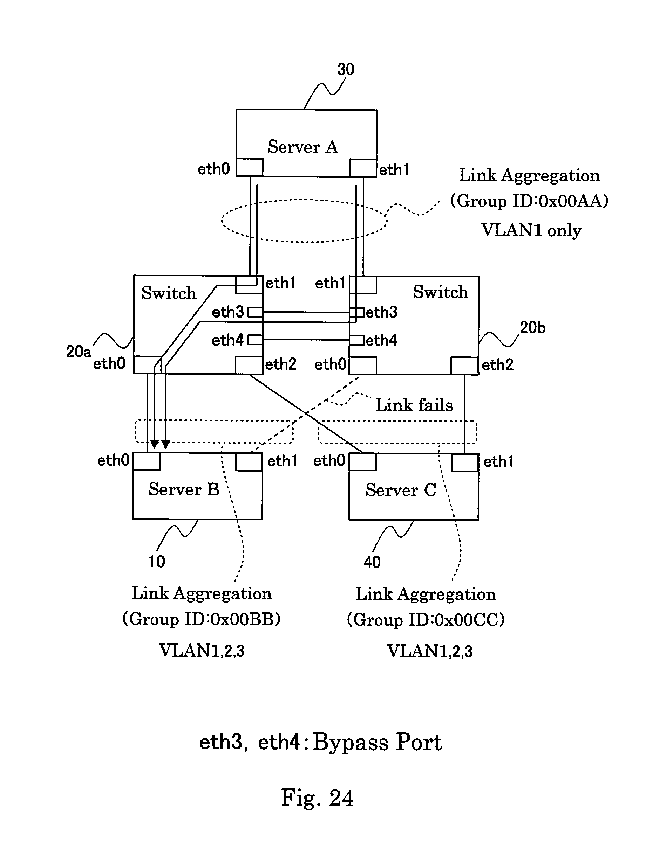

FIG. 24 is a diagram showing a network configuration of the switches 20a and 20b according to the third embodiment (when a failure occurs on the physical link connecting the port etho of the switch 20b and the port eth1 of the server 10(B) with each other).

The data transmitted from the server 30(A) via the switch 20b to the server 10(B) is transmitted, not via the physical link connecting the port etho of the switch 20b and the port eth1 of the server 10(B) with each other, but via a physical link connecting the bypass ports eth3 with each other, further via the switch 20a to the server 10.

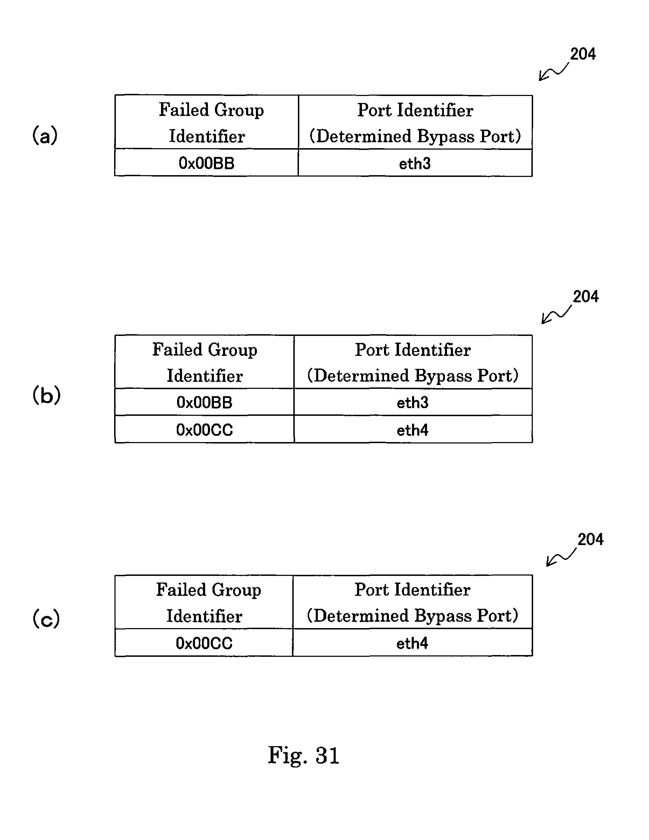

The failed physical link connecting the port etho of the switch 20b and the port eth1 of the server 10(B) with each other belongs to the aggregation group having the group identifier oxooBB. The bypass port eth3 is associated with the group identifier oxooBB (refer to FIG. 31(a)).

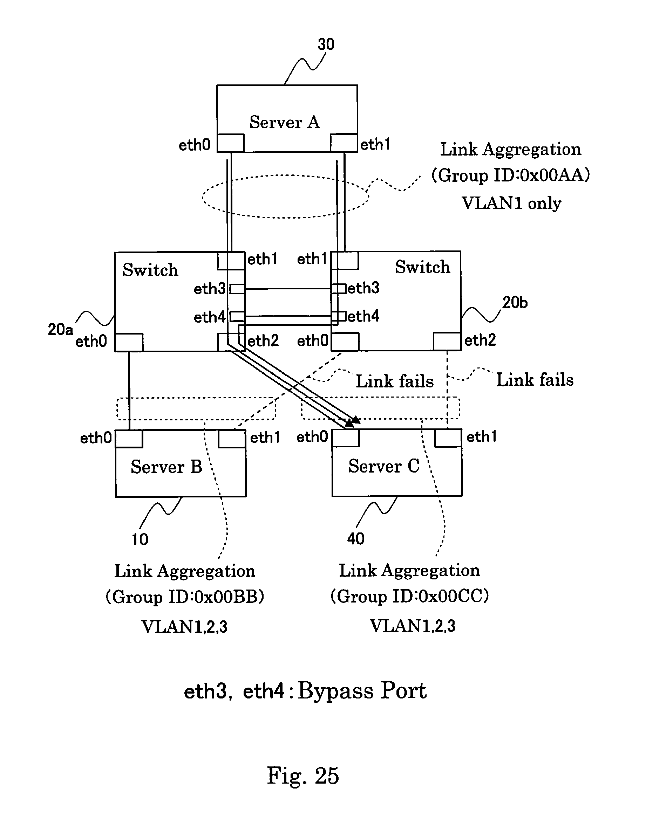

FIG. 25 is a diagram showing a network configuration of the switches 20a and 20b according to the third embodiment (when failures occur on the physical link connecting the port etho of the switch 20b and the port eth1 of the server 10(B) and on the physical link connecting the port eth2 of the switch 20b and the port eth1 of the server 40(C)).

The data transmitted from the server 30(A) via the switch 20b to the server 40(C) is transmitted, not via the physical link connecting the port eth2 of the switch 20b and the port eth1 of the server 40(C) with each other, but via a physical link connecting the bypass ports eth4 with each other, further via the switch 20a to the server 40.

The failed physical link connecting the port eth2 of the switch 20b and the port eth1 of the server 40(C) with each other belongs to the aggregation group having the group identifier oxooCC. The bypass port eth4 is associated with the group identifier oxooCC (refer to FIG. 31(b)).

As described above, port identifiers of different bypass ports are associated with different aggregation group identifiers having generated failures. In other words, the bypass port eth3 is associated with the group identifier oxooBB (refer to FIG. 31(a), and the bypass port eth4 is associated with the group identifier oxooCC (refer to FIG. 31(b)). In a sense, one aggregation group occupies one bypass port.

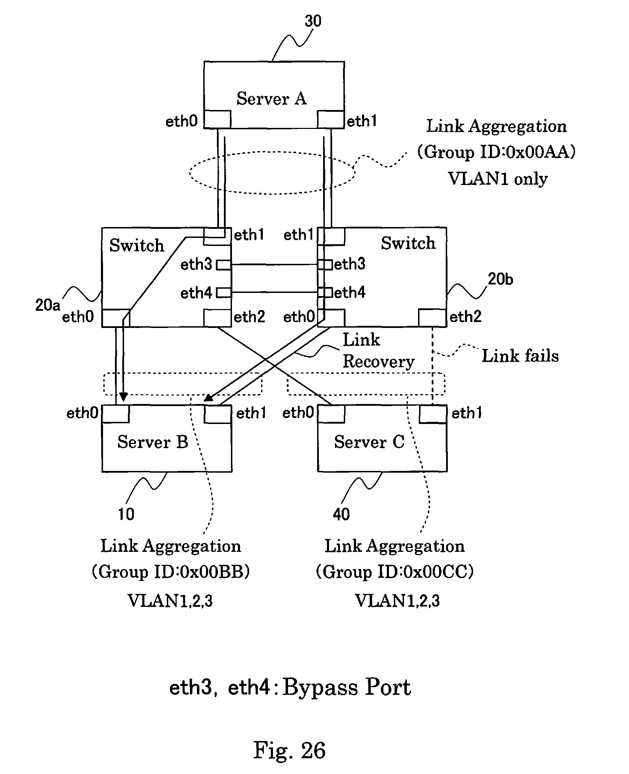

FIG. 26 is a diagram showing a network configuration of the switches 20a and 20b according to the third embodiment (upon recovery from the failure on the physical link connecting the port etho of the switch 20b and the port eth1 of the server 10(B)).

When the physical link connecting the port etho of the switch 20b and the port eth1 of the server 10 with each other recovers from the failure, the use of the physical link connecting the bypass ports eth3 with each other is stopped. The data to be transmitted from the server 30 via the switch 20b to the server 10 is transmitted via the physical link connecting between the port etho of the switch 20b and the port eth1 of the server 10 to the server 10.

In this case, the association between the group identifier oxooBB and the bypass port eth3 is reset (refer to FIG. 31(c)).

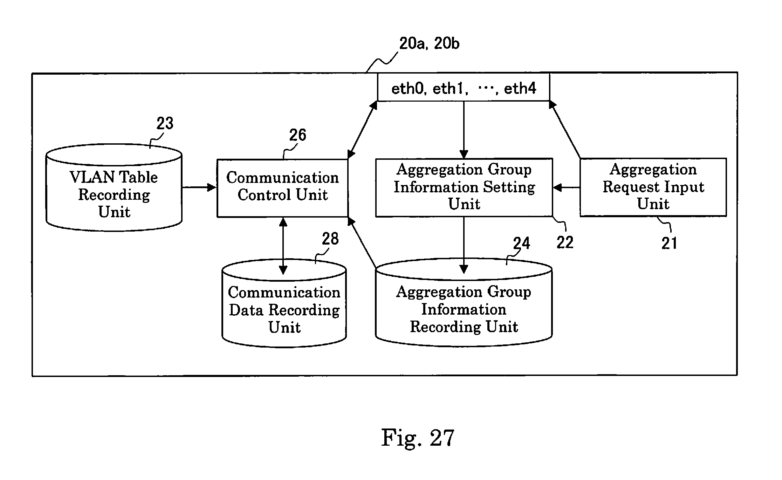

FIG. 27 is a functional block diagram showing a configuration common to the switches 20a and 20b according to the third embodiment of the present invention. The switches 20a and 20b according to the third embodiment of the present invention both include the ports etho, eth1, eth2, eth3, and eth4, the aggregation request input unit 21, the aggregation group information setting unit 22, a VLAN table recording unit 23, an aggregation group information recording unit 24, a communication control unit 26, and a communication data recording unit 28. The components other than the ports eth2 and eth4, and the VLAN table recording unit 23 are the same as those of the first embodiment, and a description thereof is therefore omitted. The ports eth2 and eth4 are described above.

The VLAN table recording unit 23 records aggregation group identifiers and port identifiers belonging to VLANs (virtual LANs).

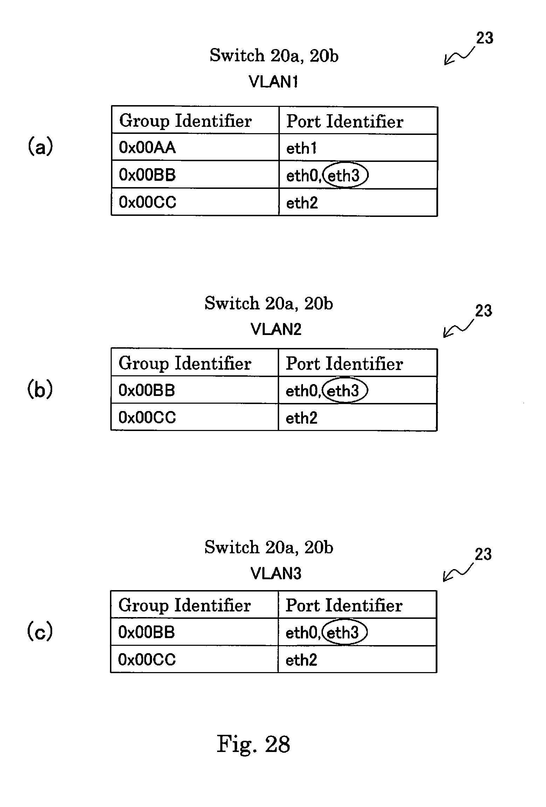

FIG. 28 is a drawing showing VLAN tables recorded by the VLAN table recording unit 23, and shows a VLAN table (FIG. 28(a)) relating to the VLAN1, a VLAN table (FIG. 28(b)) relating to the VLAN2, and a VLAN table (FIG. 28(c)) relating to the VLAN3.

A VLAN (virtual LAN) is known, and aggregation groups and ports belonging to a VLAN are treated as a single LAN (Local Area Network). Referring to FIG. 28(a), the aggregation groups oxooAA, oxooBB, and oxooCC, and the port identifiers eth1, etho, "eth3", and eth2 belong to VLAN1.

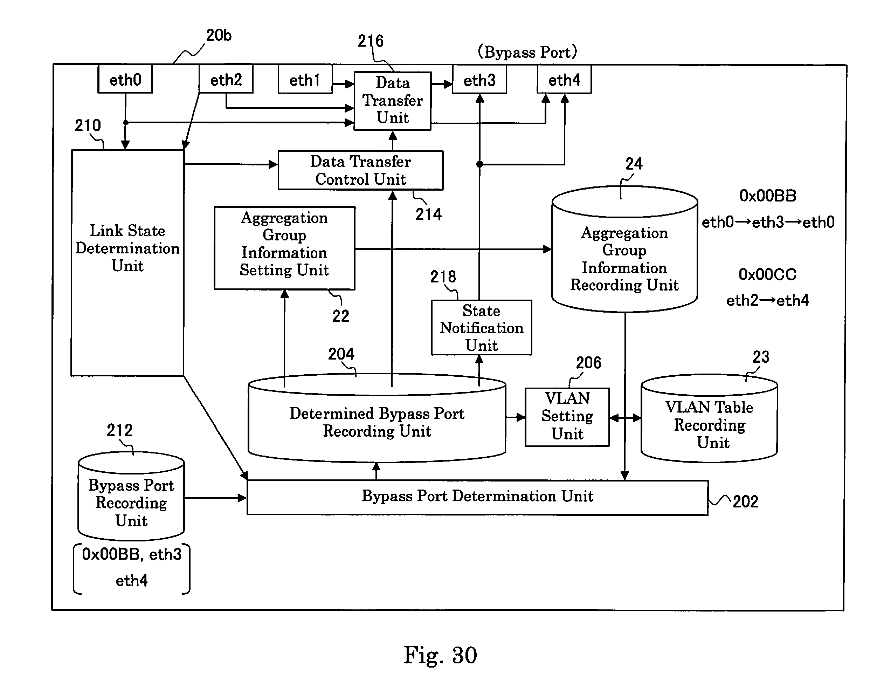

On this occasion, eth3 is originally a bypass port, and is not always associated with the aggregation group oxooBB (refer to FIG. 23(a)). However, though it is determined in advance that the bypass port eth3 is to be used if the aggregation group oxooBB fails (refer to the port identifier eth3 of the bypass port associated with the aggregation group identifier oxooBB in the bypass port recording unit 212 in FIG. 30), the port identifier eth3 is associated with the group identifier oxooBB, and is recorded in FIG. 28(a).

Similarly, referring to FIG. 28(b), the aggregation groups oxooBB and oxooCC, and the port identifiers etho, "eth3", and eth2 belong to VLAN2. Referring to FIG. 28(c), the aggregation groups oxooBB and oxooCC, and the port identifiers etho, "eth3", and eth2 belong to VLAN3.

The record in the VLAN table recording unit 23 shown in FIG. 28 is carried out in the switch 20b before the determination of presence or absence of a failure on the links by the link state determination unit 210, which is described later, and is carried out before the bypass ports eth3 and eth4 receive an aggregation group identifier and a port identifier of one bypass port in the switch 20a.

The configuration of the server 10 according to the third embodiment of the present invention is the same as that of the first embodiment, and hence description thereof is omitted.

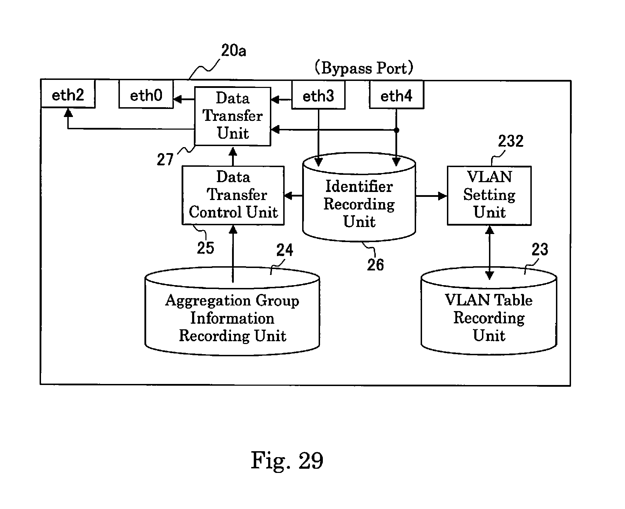

FIG. 29 is a functional block diagram showing a configuration of the switch 20a according to the third embodiment of the present invention. It should be noted that the same portions as those of the first embodiment (refer to FIG. 4) are not shown except for the port etho and the aggregation group information recording unit 24.

The switch 20a according to the third embodiment includes the port eth2, the bypass ports eth3 and eth4, the VLAN table recording unit 23, a VLAN setting unit 232, the data transfer control unit 25, an identifier recording unit 26, and the data transfer unit 27 in addition to the switch 20a according to the first embodiment.

The identifier recording unit 26 receives and records the aggregation group identifier and the port identifier of one bypass port from the bypass port eth3 or eth4. For example, the identifier recording unit 26 receives and records the group identifier oxooBB and the port identifier eth3 of the bypass port from the bypass port eth3 (refer to FIG. 24, and FIG. 31(a)). Moreover, the identifier recording unit 26 receives and records the group identifier oxooCC and the port identifier eth4 of the bypass port from the bypass port eth4 (refer to FIG. 25 and FIG. 31(b)).

It should be noted that port identifiers of different bypass ports are associated with different aggregation group identifiers in the recorded content by the identifier recording unit 26. For example, the port identifier eth3 of the bypass port is associated with the group identifier oxooBB, and the port identifier eth4 of the bypass port is associated with the group identifier oxooCC. This means that one aggregation group occupies one bypass port.

The VLAN table recording unit 23 is as described before. If an aggregation group identifier and a port identifier of one bypass port are recorded in the identifier recording unit 26, the VLAN setting unit 232 accordingly rewrites the recorded content of the VLAN table recording unit 23. For example, if the aggregation group identifier oxooCC and the port identifier eth4 of the one bypass port are recorded in the identifier recording unit 26, the port identifier eth4 is associated with the group identifier oxooCC in the VLAN tables relating to VLAN1, VLAN2, and VLAN3 (refer to FIGS. 28(a), 28(b), and 28(c)), and is additionally recorded.

However, even if an aggregation group identifier and a port identifier of one bypass port are recorded in the identifier recording unit 26, if a content corresponding thereto is recorded in the VLAN table recording unit 23, the VLAN setting unit 232 does not rewrite the recorded content of the VLAN table recording unit 23. For example, even if the aggregation group identifier oxooBB and the port identifier eth3 of the one bypass port are recorded in the identifier recording unit 26, the port identifier eth3 is associated with the group identifier oxooBB, and is recorded in the VLAN tables relating to VLAN1, VLAN2, and VLAN3 (refer to FIGS. 28(a), 28(b), and 28(c)), and the VLAN setting unit 232 does not rewrite the recorded content of the VLAN table recording unit 23.

The data transfer control unit 25 reads the association between the group identifier oxooBB and the bypass port eth3 (refer to FIG. 31(a)) and the association between the group identifier oxooCC and the bypass port eth4 (refer to FIG. 31(b)) from the identifier recording unit 26.

The data transfer control unit 25 further reads the port identifier etho included in the aggregation information (refer to FIG. 23(a)) to which the group identifier oxooBB belongs from the aggregation group information recording unit 24. Then, the data transfer control unit 25 causes the data transfer unit 27 to transfer the communication data received by the bypass port eth3 to the port represented by the port identifier etho included in the aggregation information.

Moreover, the data transfer control unit 25 further reads the port identifier eth2 included in the aggregation information (refer to FIG. 23(b)) to which group identifier oxooCC belongs from the aggregation group information recording unit 24. Then, the data transfer control unit 25 causes the data transfer unit 27 to transfer the communication data received by the bypass port eth4 to the port represented by the port identifier eth2 included in the aggregation information.

The data transfer unit 27 transfers communication data received by the bypass port represented by the port identifier recorded in the identifier recording unit 26 to the port represented by the port identifier associated with the aggregation group identifier recorded in the identifier recording unit 26 in the aggregation information (recorded content of the aggregation group information recording unit 24, refer to FIG. 23).

For example, the data transfer unit 27 transfers communication data received by the bypass port eth3 represented by the port identifier recorded in the identifier recording unit 26 to the port represented by the port identifier etho associated with the aggregation group identifier oxooBB recorded in the identifier recording unit 26 in the aggregation information (recorded content of the aggregation group information recording unit 24, refer to FIG. 23(a)) (refer to FIG. 24). This transfer can be implemented as flooding.

For example, the data transfer unit 27 transfers communication data received by the bypass port eth4 represented by the port identifier recorded in the identifier recording unit 26 to the port represented by the port identifier eth2 associated with the aggregation group identifier oxooCC recorded in the identifier recording unit 26 in the aggregation information (recorded content of the aggregation group information recording unit 24, refer to FIG. 23(b)) (refer to FIG. 25). This transfer can be implemented as flooding.

A description will now also be given of functions when the physical link connecting the port etho of the switch 20b and the port eth1 of the server 10(B) with each other recovers from the failure (refer to FIG. 26).

In this case, the aggregation group identifier oxooBB associated with the port determined not to be failed (port etho of the switch 20b) and the port identifier eth3 of the bypass port associated therewith are deleted from the recorded content of the identifier recording unit 26 (refer to FIG. 31(c)). In a sense, the occupation of the bypass port eth3 by the aggregation group having the group identifier oxooBB is reset.

Before oxooBB and the eth3 are deleted from the recorded content of the identifier recording unit 26, the data transfer control unit 25 causes the data transfer unit 27 to stop the transfer of the communication data (transfer from the bypass port eth3 to the port etho).

For example, before oxooBB and the eth3 are deleted from the recorded content of the identifier recording unit 26, a schedule that oxooBB and the eth3 are to be deleted is recorded in the identifier recording unit 26. The data transfer control unit 25 reads the deletion schedule, stops the transfer of the communication data, and carries out the deletion.

If an aggregation group identifier and a port identifier of one bypass port are deleted from the identifier recording unit 26, the VLAN setting unit 232 accordingly rewrites the recorded content of the VLAN table recording unit 23. For example, if the aggregation group identifier oxooCC and the port identifier eth4 of the one bypass port are deleted from the identifier recording unit 26, the port identifier eth4 associated with the group identifier oxooCC in the VLAN tables relating to VLAN1, VLAN2, and VLAN3, and additionally recorded is deleted. Then, the VLAN tables return to the state shown in FIGS. 28(a), 28(b), and 28(c).

Even if an aggregation group identifier and a port identifier of one bypass port are deleted from the identifier recording unit 26, if a corresponding content is recorded in the VLAN table recording unit 23 in advance (before the reception of the aggregation group identifier and the port identifier of the one bypass port by the bypass port eth3 or eth4), the VLAN setting unit 232 does not rewrite the recorded content of the VLAN table recording unit 23. For example, even if the aggregation group identifier oxooBB and the port identifier eth3 of the one bypass port are deleted from the identifier recording unit 26, the VLAN setting unit 232 does not rewrite the recorded content of the VLAN table recording unit 23. In other words, the VLAN setting unit 232 does not delete the port identifier eth3 associated with the group identifier oxooBB, and recorded in the VLAN table recording unit 23.

FIG. 30 is a functional block diagram showing a configuration of the switch 20b according to the third embodiment of the present invention. It should be noted that the same portions as those of the first embodiment (refer to FIG. 4) are not shown except for the port etho, the aggregation group information setting unit 22, and the aggregation group information recording unit 24.

The switch 20b according to the third embodiment includes the port eth2, the bypass ports eth3 and eth4, a bypass port determination unit 202, a determined bypass port recording unit 204, a VLAN setting unit 206, the VLAN table recording unit 23, the link state determination unit 210, the bypass port recording unit 212, a data transfer control unit 214, a data transfer unit 216, and a state notification unit 218 in addition to the switch 20b according to the first embodiment.

The link state determination unit 210 determines whether a failure is present or absent on the links to which the ports etho and eth2 represented by the port identifiers included in the aggregation information (refer to FIG. 23) recorded in the aggregation group information recording unit 24 are connected. It should be noted that a port connected to a link determined to be failed by the link state determination unit 210 is referred to as failed port. For example, the port etho of the switch 20b is a failed port in FIG. 24. For example, the port etho and the port eth2 of the switch 20b are failed ports in FIG. 25.

The bypass port recording unit 212 records the identifiers eth3 and eth4 of the bypass ports. It should be noted that an aggregation group identifier and a port identifier of the bypass port are associated with each other and are recorded in the bypass port recording unit 212 before the determination of presence or absence of a failure on the links by the link state determination unit 210. The bypass port recording unit 212 records the aggregation group identifier oxooBB and the port identifier eth3 of the bypass port associated with each other in the example in FIG. 30. It should be noted that the bypass port recording unit 212 also records the port identifier eth4 of the bypass port which is not associated with the aggregation group identifier.

The bypass port determination unit 202 associates a failed aggregation group identifier which is an aggregation group identifier with which a failed port is associated in the aggregation information (recorded content of the aggregation group information recording unit 24, refer to FIG. 23) and a port identifier of a determined bypass port, which is one bypass port, with each other.

It should be noted that the bypass port determination unit 202 associates port identifiers of different determined bypass ports with different failed aggregation group identifiers. In a sense, one failed aggregation group identifier occupies one determined bypass port.

The determined bypass port recording unit 204 receives and records a failed aggregation group identifier and a port identifier associated with each other from the bypass port determination unit 202.

FIG. 31 is a diagram showing a recorded content of the determined bypass port recording unit 204.

First, the bypass port determination unit 202 receives a condition that the port etho is a failed port from the link state determination unit 210 (refer to FIG. 24). On this occasion, the bypass port determination unit 202 reads the aggregation group identifier oxooBB (referred to as "failed aggregation group identifier") with which the failed port etho is associated in the aggregation information (recorded content of the aggregation group information recording unit 24, refer to FIG. 23(a)) from the aggregation group information recording unit 24. Further, the bypass port determination unit 202 determines one bypass port out of the bypass ports eth3 and eth4. The determined bypass port is referred to as determined bypass port.

On this occasion, the bypass port determination unit 202 causes the determined bypass port recording unit 204 to record the bypass port represented by the port identifier eth3 associated with the failed aggregation group identifier oxooBB in the bypass port recording unit 212 as a determined bypass port associated with the failed aggregation group identifier oxooBB (refer to FIG. 31(a)).

Further, the bypass port determination unit 202 receives a condition that the port eth2 is also a failed port from the link state determination unit 210 (refer to FIG. 25). On this occasion, the bypass port determination unit 202 reads the failed aggregation group identifier oxooCC with which the failed port eth2 is associated in the aggregation information (recorded content of the aggregation group information recording unit 24, refer to FIG. 23(b)) from the aggregation group information recording unit 24.

On this occasion, the failed aggregation group identifier oxooCC is not associated with a port identifier of a bypass port in the bypass port recording unit 212. In this case, the bypass port determination unit 202 sets any one (bypass port eth4 in the example in FIG. 30) of the bypass ports as the determined bypass port. It should be noted that since the bypass port eth3 is already associated with (occupied by) the failed aggregation group identifier oxooBB, there is no other bypass port than the bypass port eth4 which can be the determined bypass port. The bypass port determination unit 202 associates the failed aggregation group identifier oxooCC with the determined bypass port eth4, and causes the determined bypass port recording unit 204 to record the association (refer to FIG. 31(b)).

As described above, the bypass port determination unit 202 associates different failed aggregation group identifiers with port identifiers of different determined bypass ports (associates the failed aggregation group identifier oxooBB with the determined bypass port eth3, and associates the failed aggregation group identifier oxooCC with the determined bypass port eth4). In a sense, one failed aggregation group identifier occupies one determined bypass port.

The data transfer control unit 214 receives a failed port from the link state determination unit 210, and reads out a determined bypass port from the determined bypass port recording unit 204. The data transfer control unit 214 causes the data transfer unit 216 to transfer the communication data received by all the ports other than the failed ports and the bypass ports eth3 and eth4 to the determined bypass port.

The data transfer unit 216 undergoes the above-described control by the data transfer control unit 214, and transfers the communication data received by all the ports other than the failed ports and the bypass ports eth3 and eth4 to the determined bypass ports. This transfer can be implemented as flooding.

For example, the data transfer control unit 214 receives the failed port etho from the link state determination unit 210 in the state shown in FIG. 24, and reads out the determined bypass port eth3 from the determined bypass port recording unit 204. Then, the data transfer control unit 214 causes the data transfer unit 216 to transfer the communication data received by all the ports eth1 and eth2 other than the failed port etho and the bypass ports eth3 and eth4 to the determined bypass port eth3.

For example, the data transfer control unit 214 receives the failed port eth2 from the link state determination unit 210 in the state shown in FIG. 25, and reads out the determined bypass port eth4 from the determined bypass port recording unit 204. Then, the data transfer control unit 214 causes the data transfer unit 216 to transfer the communication data received by all the port eth1 other than the failed port eth2 and the bypass ports eth3 and eth4 (the port etho is not recovered, and cannot carry out the reception) to the determined bypass port eth4.

The state notification unit 218 transmits the recorded content of the determined bypass port recording unit 204 (the failed aggregation group identifiers and the port identifiers of the determined bypass ports associated with each other by the bypass port determination unit) from the determined bypass ports. It should be noted that the transmitted recorded content of the determined bypass port recording unit 204 is received by the switch 20a, and is recorded in the identifier recording unit 26. Thus, the recorded content of the identifier recording unit 26 also becomes the same as the recorded content of the determined bypass port recording unit 204.

It should be noted that the aggregation information setting unit 22 deletes the port identifiers representing the failed ports from the aggregation information (refer to FIG. 23) recorded in the aggregation group information recording unit 24, and adds the port identifiers representing the determined bypass ports.

For example, the aggregation information setting unit 22 deletes the port identifier etho representing the failed port from the aggregation information (refer to FIG. 23(a)) recorded in the aggregation group information recording unit 24, and adds the port identifier eth3 representing the determined bypass port.

For example, the aggregation information setting unit 22 deletes the port identifier eth2 representing the failed port from the aggregation information (refer to FIG. 23(b)) recorded in the aggregation group information recording unit 24, and adds the port identifier eth4 representing the determined bypass port.

The VLAN table recording unit 23 is as described before. If a failed aggregation group identifier and a port identifier of a determined bypass port are recorded in the determined bypass port recording unit 204, the VLAN setting unit 206 accordingly rewrites the recorded content of the VLAN table recording unit 23. For example, if the failed aggregation group identifier oxooCC and the port identifier eth4 of the determined bypass port are recorded in the determined bypass port recording unit 204, the VLAN setting unit 206 adds and records the port identifier eth4 associated with the group identifier oxooCC in the VLAN tables relating to VLAN1, VLAN2, and VLAN3 (refer to FIGS. 28(a), 28(b), and 28(c)).

However, even if a failed aggregation group identifier and a port identifier of a determined bypass port are recorded in the determined bypass port recording unit 204, if contents corresponding thereto are recorded in the VLAN table recording unit 23, the VLAN setting unit 206 does not rewrite the recorded content of the VLAN table recording unit 23. For example, even if the failed aggregation group identifier oxooBB and the port identifier eth3 of the determined bypass port are recorded in the determined bypass port recording unit 204, the port identifier eth3 is associated with the group identifier oxooBB, and is recorded in the VLAN tables relating to VLAN1, VLAN2, and VLAN3 (refer to FIGS. 28(a), 28(b), and 28(c)), and the VLAN setting unit 206 does not rewrite the recorded content of the VLAN table recording unit 23.

A description will now also be given of functions when the physical link connecting the port etho of the switch 20b and the port eth1 of the server 10(B) with each other recovers from the failure (refer to FIG. 26).

On this occasion, if a link connected to a failed port is determined not to be failed by the link state determination unit 210, the failed port is referred to as "recovered port". For example, in the state shown in FIG. 26, the port etho is a recovered port.

The bypass port determination unit 202 resets the association between the failed aggregation group identifier oxooBB with which the recovered port etho is associated and the port identifier eth3 of the determined bypass port. In a sense, the occupation of the determined bypass port eth3 by the aggregation group oxooBB is reset. The reset of the association refers to deletion of the association between oxooBB and eth3 from the recorded content (refer to FIG. 31(b)) of the determined bypass port recording unit 204 (refer to FIG. 31(c)).

It should be noted that a schedule of the deletion is recorded in the determined bypass port recording unit 204 before the deletion of the association between oxooBB and eth3. The data transfer control unit 214 and the aggregation information setting unit 24 read the deletion schedule, and carry out the following operations.

The data transfer control unit 214 stops the transfer of the communication data by the data transfer unit 216 to the determined bypass port eth3 associated with the failed aggregation group identifier oxooBB with which the recovered port etho is associated.

It should be noted that the aggregation information setting unit 22 deletes the port identifier eth3 representing the determined bypass port from the aggregation information recorded in the aggregation group information recording unit 24, and adds the port identifier etho representing the recovered port. As a result, the aggregation information returns to the information shown in FIG. 23(a).

Then, the association between oxooBB and eth3 is deleted from the determined bypass port recording unit 204, and, then, the state notification unit 218 carries out the following operation.

The state notification unit 218 transmits the determination of the absence of the failure from the determined bypass port eth3. In other words, the state notification unit 218 transmits the condition that the association between the failed aggregation group identifier oxooBB and the port identifier eth3 of the determined bypass port is reset from the determined bypass port eth3.

If an aggregation group identifier and a port identifier of one bypass port are deleted from the determined bypass port recording unit 204, the VLAN setting unit 206 accordingly rewrites the recorded content of the VLAN table recording unit 23. For example, if the aggregation group identifier oxooCC and the port identifier eth4 of the one bypass port are deleted from the determined bypass port recording unit 204, the port identifier eth4 associated with the group identifier oxooCC in the VLAN tables relating to VLAN1, VLAN2, and VLAN3, and additionally recorded is deleted. Then, the VLAN tables return to the state shown in FIGS. 28(a), 28(b), and 28(c).

Even if an aggregation group identifier and a port identifier of one bypass port are deleted from the determined bypass port recording unit 204, if a corresponding content is recorded in advance (before the determination of presence or absence of a failure on the links by the link state determination unit 210) in the VLAN table recording unit 23, the VLAN setting unit 206 does not rewrite the recorded content of the VLAN table recording unit 23. For example, even if the aggregation group identifier oxooBB and the port identifier eth3 of the one bypass port are deleted from the determined bypass port recording unit 204, the VLAN setting unit 206 does not rewrite the recorded content of the VLAN table recording unit 23. In other words, the VLAN setting unit 206 does not delete the port identifier eth3 associated with the group identifier oxooBB, and recorded in the VLAN table recording unit 23.

A description will now be given of an operation of the third embodiment of the present invention.

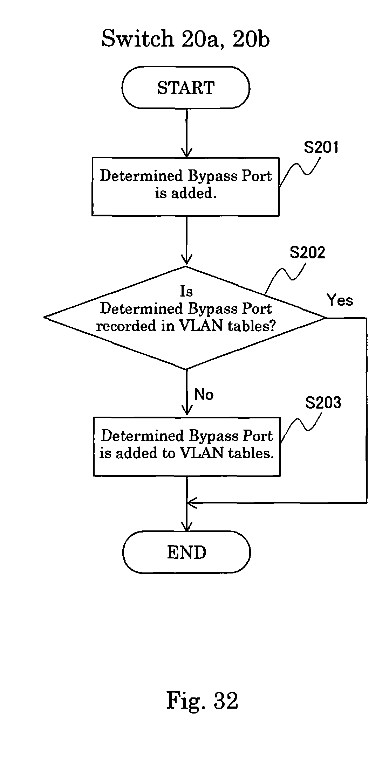

FIG. 32 is a flowchart showing an operation of the switches 20a and 20b according to the third embodiment (upon addition of a determined bypass port).

First, an identifier of a determined bypass port is added to the determined bypass port recording unit 204 of the switch 20b (or the identifier recording unit 26 of the switch 20a) (S201). On this occasion, the VLAN setting unit 206 of the switch 20b (or the VLAN setting unit 232 of the switch 20a) reads the recorded content of the VLAN table recording unit 23 (refer to FIG. 28), and determines whether the identifier of the determined bypass port is recorded in the VLAN tables or not (S202). If the identifier of the determined bypass port is not recorded in the VLAN table (No in S202) (for example, if the identifier of the determined bypass port is eth4), the identifier of the determined bypass port is added to the VLAN tables of the VLAN table recording unit 23 (S203). Conversely, if the identifier of the determined bypass port is recorded in the VLAN tables (Yes in S202) (for example, if the identifier of the determined bypass port is eth3), none is especially carried out.

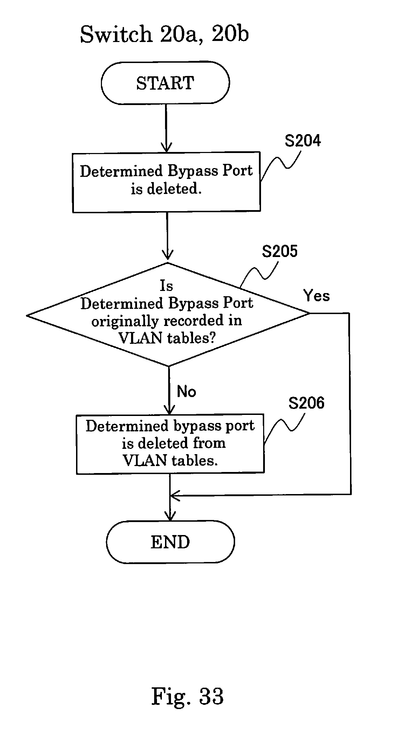

FIG. 33 is a flowchart showing an operation of the switches 20a and 20b according to the third embodiment (upon deletion of a determined bypass port).

First, an identifier of a determined bypass port is deleted from the determined bypass port recording unit 204 of the switch 20b (or the identifier recording unit 26 of the switch 20a) (S204). On this occasion, the VLAN setting unit 206 of the switch 20b (or the VLAN setting unit 232 of the switch 20a) reads the recorded content of the VLAN table recording unit 23 (refer to FIG. 28), and determines whether the identifier of the determined bypass port is originally recorded in the VLAN tables or not (S205). For the switch 20b, it is determined whether the identifier of the determined bypass port is recorded in the VLAN tables or not before the determination of presence or absence of a failure on the links by the link state determination unit 210. For the switch 20a, it is determined whether the identifier of the determined bypass port is recorded in the VLAN tables or not before an aggregation group identifier and a port identifier of one bypass port are received by the bypass port eth3 or eth4.

If the identifier of the determined bypass port is not originally recorded in the VLAN tables (No in S205) (for example, if the identifier of the determined bypass port is eth4), the identifier of the determined bypass port is deleted from the VLAN tables of the VLAN table recording unit 23 (S206). Conversely, if the identifier of the determined bypass port is originally recorded in the VLAN tables (Yes in S205) (for example, if the identifier of the determined bypass port is eth3), none is especially carried out.

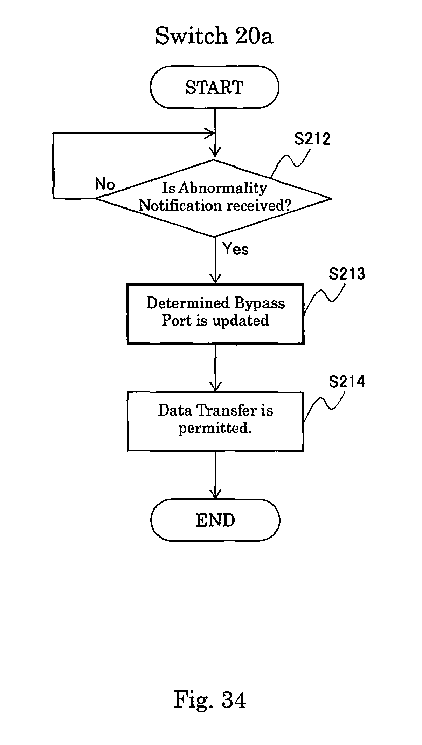

FIG. 34 is a flowchart showing an operation of the switch 20a according to the third embodiment (upon reception of an abnormality notification).

First, if the bypass port eth3 or eth4 does not receive an abnormality notification that a physical link is failed (No in S212), the switch 20a waits until the reception thereof.

The abnormality notification refers to a case in which the switch 20a newly receives an aggregation group identifier and a port identifier of one bypass port (refer to FIG. 31(a) and FIG. 31(b)). In this case, a failure has newly occurred on a link (refer to FIG. 24 and FIG. 25).

If the abnormality notification is received (Yes in S212), an aggregation group identifier and a port identifier of one bypass port (determined bypass port) are newly recorded in the identifier recording unit 26 (refer to FIG. 31(a) and FIG. 31(b)) (S213).

Then, the data transfer control unit 25 permits the data transfer unit 27 to transfer data (S214). In other words, the data transfer control unit 25 causes the data transfer unit 27 to transfer communication data received by the bypass port eth3 (eth4) to the port etho (eth2).

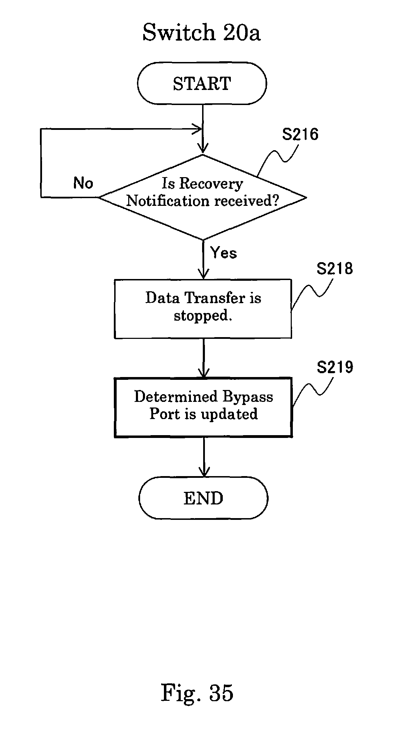

FIG. 35 is a flowchart showing an operation of the switch 20a according to the third embodiment (upon reception of a recovery notification).

First, if the bypass port eth3 or eth4 does not receive a recovery notification that a physical link is failed (No in S216), the switch 20a waits until the reception thereof.

It should be noted that the recovery notification refers to a case in which a notification of the deletion of the aggregation group identifier oxooBB and the port identifier eth3 of the one bypass port is received (refer to FIG. 31(c)). In this case, the failed link has recovered (refer to FIG. 26).

When the recovery notification is received (Yes in S216), the schedule that the aggregation group identifier oxooBB and the port identifier eth3 of the one bypass port are deleted from the recorded content of the identifier recording unit 26 is recorded.

When the data transfer control unit 25 reads the deletion schedule from the recorded content of the identifier recording unit 26, the data transfer control unit 25 stops the data transfer by the data transfer unit 27 (S218). In other words, the data transfer control unit 25 causes the data transfer unit 27 not to transfer communication data received by the bypass port eth3 to the port etho.

Further, the data transfer control unit 25 deletes the aggregation group identifier and the port identifier of the one bypass port (determined bypass port) from the identifier recording unit 26 (refer to FIG. 31(c)) (S219).

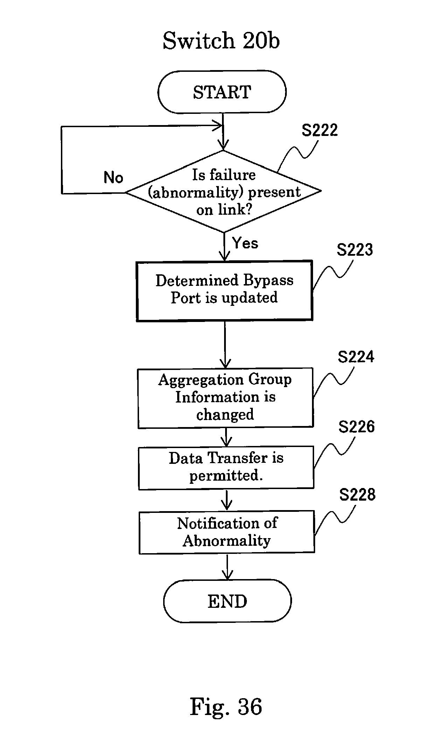

FIG. 36 is a flowchart showing an operation of the switch 20b according to the third embodiment (in an abnormal state).

First, the link state determination unit 210 determines whether or not a failure (abnormality) is present on the links to which the ports etho and eth2 are connected (S222). If there is not an abnormality (No in S222), the link state determination unit 210 waits until an occurrence of an abnormality.

If the link state determination unit 210 detects a failure (abnormality) of the links (Yes in S222), the detection is provided for the bypass port determination unit 202. The bypass port determination unit 202 associates one of the bypass ports eth3 and eth4 (determined bypass ports) with each of the failed aggregation group identifiers oxooBB and oxooCC with which the failed ports etho and eth2 are respectively associated, and causes the determined bypass port recording unit 204 to record the associations (refer to FIGS. 31(a) and 31(b)) (S223).

Further, the aggregation information setting unit 22 changes the aggregation group information (S224). In other words, the aggregation information setting unit 22 deletes the port identifiers etho and eth2 representing the failed ports from the aggregation information (refer to FIGS. 23(a) and 23(b)) recorded in the aggregation group information recording unit 24, and adds the port identifiers eth3 and eth4 representing the determined bypass ports.

Further, the data transfer control unit 214 permits the data transfer unit 216 to transfer data (S226). In other words, the data transfer control unit 214 causes the data transfer unit 216 to transfer the communication data received by all the ports eth1 and eth2 (eth1) other than the failed port etho (eth2) and the bypass ports eth3 and eth4 to the determined bypass port eth3 (eth4).

Moreover, the state notification unit 218 transmits the determination of the presence of a failure by the link state determination unit 210 along with the group identifiers oxooBB and oxooCC from the determined bypass ports eth3 and eth4, thereby notifying the switch 20a of the presence of the abnormalities on the links (S228).

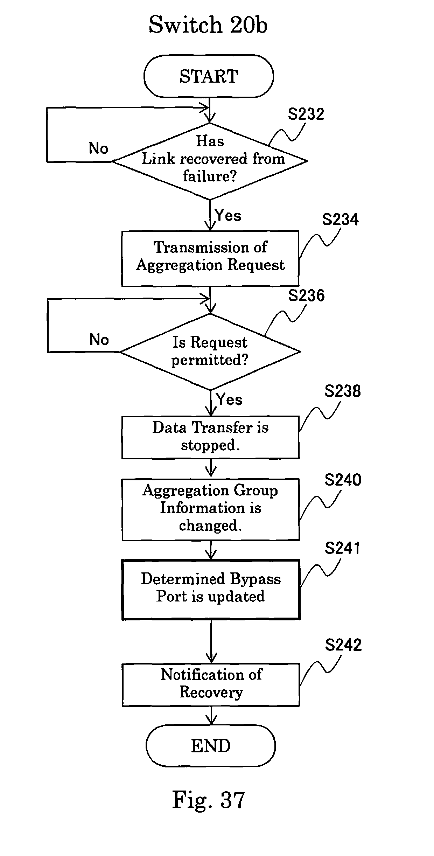

FIG. 37 is a flowchart showing an operation of the switch 20b according to the third embodiment (upon recovery).

On this occasion, the link state determination unit 210 determines whether or not the failure on the link is absent (the link has recovered from the failure) (S232). If the failure of the link is present (No in S232), the link state determination unit 210 waits until determination that the link is not failed (has recovered from the failure) is made. If the link state determination unit 210 determines that the link has recovered from the failure (Yes in S232), the transmission of the aggregation request to the server 10 is carried out (S234). The transmission of the aggregation request (S234) is the same as that of the first embodiment, and a description thereof is therefore omitted (refer to S20 in FIG. 8).

Then, whether the permission for the aggregation request is received from the server 10 or not is determined (S236). If the permission is not received (No in S236), the link state determination unit 210 waits until the permission is received. If the permission for the aggregation request is received from the server 10 (Yes in S236), the bypass port determination unit 202 records a schedule of deletion of the association between the failed aggregation group identifier oxooBB with which the recovered port etho is associated and the port identifier eth3 of the determined bypass port from the recorded content (refer to FIG. 31(b)) of the determined bypass port recording unit 204.

On this occasion, the data transfer control unit 214 stops the transfer of the communication data by the data transfer unit 216 (S238).

Further, the aggregation information setting unit 22 deletes the port identifier eth3 representing the bypass port from the aggregation information recorded in the aggregation group information recording unit 24, and adds the port identifier etho representing the recovered port (S240). As a result, the aggregation information returns to the information shown in FIG. 23(a).

Then, the association between the failed aggregation group identifier oxooBB and the port identifier eth3 of the determined bypass port is deleted from the determined bypass port recording unit 204 (refer to FIG. 31(c)) (S241).

Then, the state notification unit 218 transmits the determination of the absence of a failure by the link state determination unit 210 along with the group identifier oxooBB from the bypass port eth3, thereby notifying the switch 20a of the absence of a failure on the link (recovery from the failure) (S242).

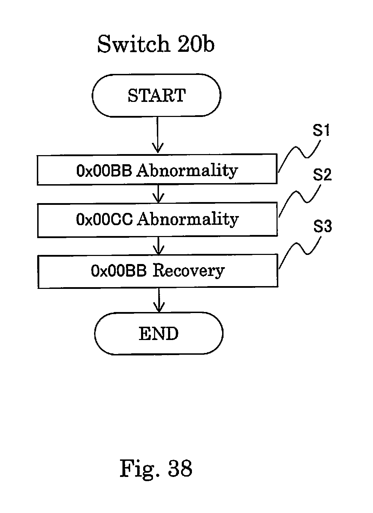

FIG. 38 is a flowchart showing a transition of a state of the switch 20b according to the third embodiment.

First, the abnormality occurs in the aggregation group oxooBB in the switch 20b (S1) (refer to FIG. 24), then, the abnormality occurs in the aggregation group oxooCC (S2) (refer to FIG. 25), and, further, the aggregation group oxooBB recovers (S3) (refer to FIG. 26).

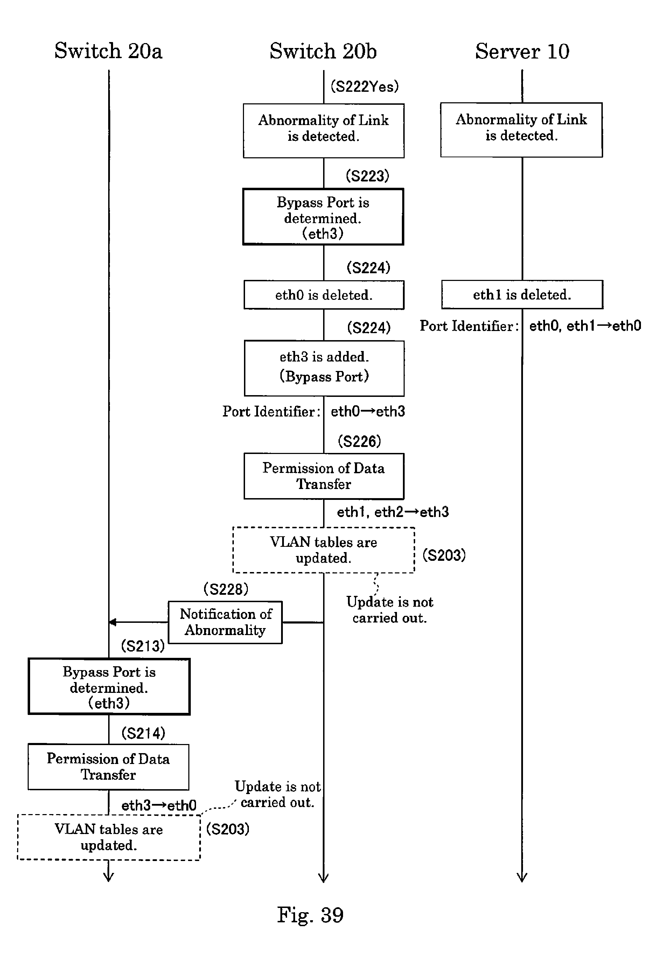

FIG. 39 is a chart showing flows of the operations of the switch 20a, the switch 20b, and the server 10 according to the third embodiment when the abnormality occurs (S1) in the aggregation group oxooBB.

First, the link state determination unit 210 of the switch 20b detects the failure (abnormality) of the link to which the port etho is connected (Yes in S222).

The bypass port determination unit 202 then determines and associates the one bypass port eth3 (determined bypass port) out of the bypass ports with the failed aggregation group identifier oxooBB, and causes the determined bypass port recording unit 204 to record the association (refer to FIG. 31(a)) (S223).

Further, the aggregation information setting unit 22 deletes the port identifier etho representing the failed port from the aggregation information (refer to FIG. 23(a)) recorded in the aggregation group information recording unit 24 (S224), and, moreover, adds the port identifier eth3 representing the determined bypass port (S224). Further, the data transfer control unit 214 permits the data transfer unit 216 to transfer data (from the ports eth1 and eth2 to the determined bypass port eth3) (S226).

The port identifier eth3 associated with the group identifier oxooBB in the VLAN tables relating to VLAN1, VLAN2, and VLAN3 (refer to FIGS. 28(a), 28(b), and 28(c)) is already recorded, and the VLAN setting unit 206 does not rewrite the recorded content of the VLAN table recording unit 23. In other words, the update of the VLAN tables (S203) is not carried out. Though the update of the VLAN tables (S203) takes time, the update does not need to be carried out, resulting in a reduction in a time required for the processing.

Moreover, the state notification unit 218 transmits the determination of the presence of a failure by the link state determination unit 210 along with the failed group identifier oxooBB from the determined bypass port eth3, thereby notifying the switch 20a of the presence of the abnormality on the link (S228).

The switch 20a receives the failed group identifier oxooBB and the determined bypass port eth3, and records them in the identifier recording unit 26 (S213). Further, the data transfer control unit 25 permits the data transfer unit 27 to transfer data (from the determined bypass port eth3 to the port etho) (S214).

The port identifier eth3 associated with the group identifier oxooBB of the VLAN tables relating to VLAN1, VLAN2, and VLAN3 (refer to FIGS. 28(a), 28(b), and 28(c)) is already recorded, and the VLAN setting unit 232 does not rewrite the recorded content of the VLAN table recording unit 23. In other words, the update of the VLAN tables (S203) is not carried out. Though the update of the VLAN tables (S203) takes time, the update does not need to be carried out, resulting in a reduction in the time required for the processing.

When the server 10 detects an abnormality of the link, the server 10 deletes the port eth1 connected to the link from the aggregation information (refer to FIG. 3(b)) recorded in the aggregation group information recording unit 14. The aggregation information after the deletion is brought into the state shown in FIG. 3(a).

As a result of this configuration, as shown in FIG. 24, the data to be transmitted from the server 30 via the switch 20b to the server 10 is transmitted, not via the physical link (failed) connecting the port etho of the switch 20b and the port eth1 of the server 10 with each other, but via the physical link connecting the bypass ports eth3 with each other, further via the switch 20a to the server 10.

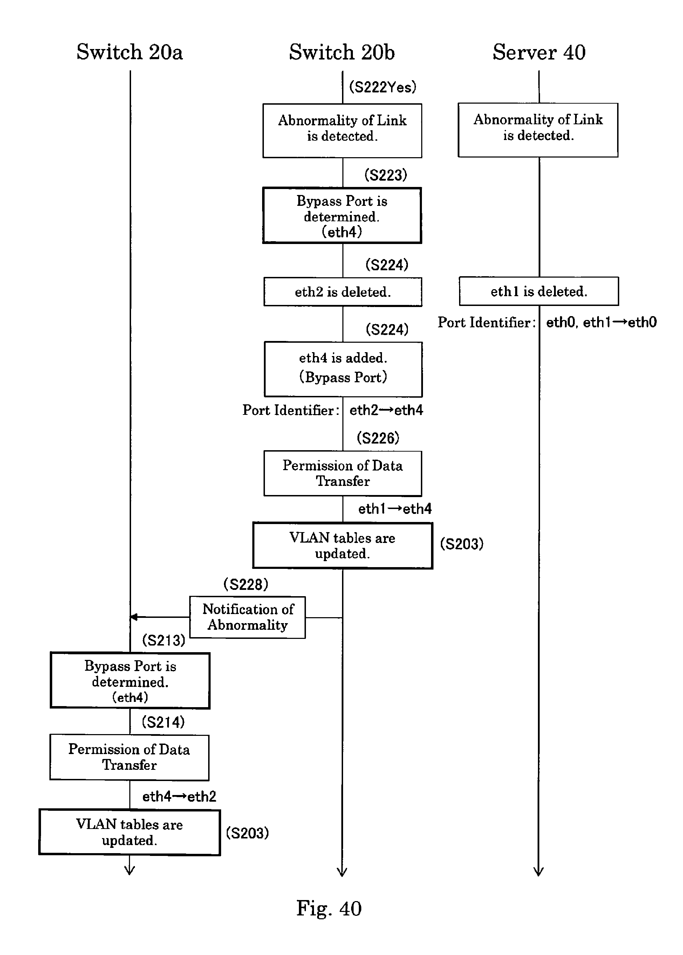

FIG. 40 is a chart showing flows of operations of the switch 20a, the switch 20b, and the server 10 according to the third embodiment when the abnormality occurs (S2) in the aggregation group oxooCC.

First, the link state determination unit 210 of the switch 20b detects the failure (abnormality) of the link to which the port eth2 is connected (Yes in S222).

The bypass port determination unit 202 then determines and associates the one bypass port eth4 (determined bypass port) out of the bypass ports with the failed aggregation group identifier oxooCC, and causes the determined bypass port recording unit 204 to record the association (refer to FIG. 31(b)) (S223).

Further, the aggregation information setting unit 22 deletes the port identifier eth2 representing the failed port from the aggregation information (refer to FIG. 23(b)) recorded in the aggregation group information recording unit 24 (S224), and, moreover, adds the port identifier eth4 representing the determined bypass port (S224). Further, the data transfer control unit 214 permits the data transfer unit 216 to transfer data (from the port eth1 to the determined bypass port eth4) (S226).

If the failed aggregation group identifier oxooCC and the port identifier eth4 of the determined bypass port are recorded in the determined bypass port recording unit 204, the VLAN setting unit 206 adds and records the port identifier eth4 associated with the group identifier oxooCC in the VLAN tables relating to VLAN1, VLAN2, and VLAN3 (refer to FIGS. 28(a), 28(b), and 28(c)).

Moreover, the state notification unit 218 transmits the determination of the presence of a failure by the link state determination unit 210 along with the failed group identifier oxooCC from the determined bypass port eth4, thereby notifying the switch 20a of the presence of the abnormality on the link (S228).

The switch 20a receives the failed group identifier oxooCC and the determined bypass port eth4, and records them in the identifier recording unit 26 (S213). Further, the data transfer control unit 25 permits the data transfer unit 27 to transfer data (from the determined bypass port eth4 to the port eth2) (S214).

The VLAN setting unit 232 adds and records the port identifier eth4 associated with the group identifier oxooCC in the VLAN tables relating to VLAN1, VLAN2, and VLAN3 (refer to FIGS. 28(a), 28(b), and 28(c)) (S203).

When the server 40 detects an abnormality of the link, the server 40 deletes the port eth1 connected to the link from the aggregation information (refer to FIG. 3(b)) recorded in the aggregation group information recording unit 14. The aggregation information after the deletion is brought into the state shown in FIG. 3(a).

As a result of this configuration, as shown in FIG. 25, the data to be transmitted from the server 30 via the switch 20b to the server 40 is transmitted, not via the physical link (failed) connecting the port eth2 of the switch 20b and the port eth1 of the server 10 with each other, but via the physical link connecting the bypass ports eth4 with each other, further via the switch 20a to the server 10.

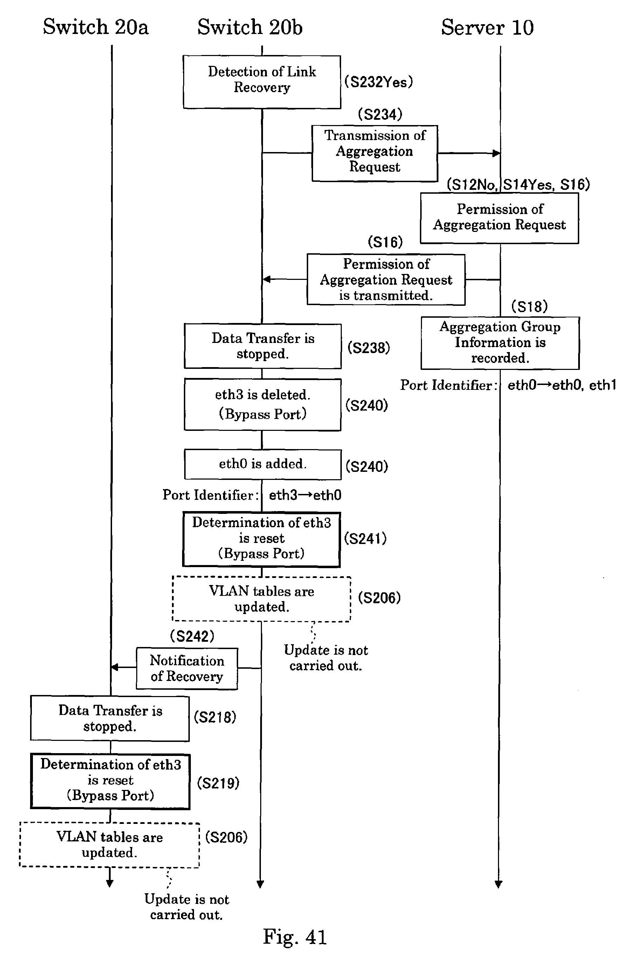

FIG. 41 is a chart showing flows of operations of the switch 20a, the switch 20b, and the server 10 according to the third embodiment upon the recovery of the aggregation group oxooBB.

First, the link state determination unit 210 of the switch 20b detects that the link to which the port etho is connected has recovered from the failure in the state in which the data communication is carried out via the physical link connecting the bypass ports eth3 with each other as shown in FIG. 24 (Yes in S232).

Then, an aggregation request is transmitted from the switch 20b to the server 10 (S234) (as in S20 in FIG. 8). It should be noted that information included in the transmission of the aggregation request is the same as the content (the system identifier 00:01:02:03:04:05, the aggregation group identifier oxooBB, and the port identifiers 0x0002 (corresponding to eth1) on the opposite side (server 10 side)) of the transmission of the aggregation request from the switch 20b to the server 10 shown in FIG. 9.

The server 10 permits the aggregation request (as No in S12, Yes in S14, and S16 in FIG. 7). In other words, the group identifier oxooBB included in the aggregation request is also recorded in the aggregation group information recording unit 14, and is thus not a first request (No in S12). Moreover, the system identifier 00:01:02:03:04:05 included in the aggregation request is also recorded in the aggregation group information recording unit 14, and the system identifiers are the same (Yes in S14). Then, the aggregation request is permitted (S16).

Then, the server 10 transmits permission for the aggregation request (similarly to S16 in FIG. 7). Further, the server 10 records the aggregation group information (similarly to S18 in FIG. 7). In other words, the server 10 adds the port identifier eth1 to the aggregation group information as shown in FIG. 3(a), thereby bringing the aggregation information into the state shown in FIG. 3(b).

When the switch 20b receives the permission for the aggregation request from the server 10, the schedule of the deletion is recorded in the determined bypass port recording unit 204 before the deletion of the association between the failed group identifier oxooBB and the determined bypass port eth3.

Then, the data transfer control unit 214 causes the data transfer unit 216 to stop the data transfer (from the port eth1 to the bypass port eth3) (S238).

Further, the aggregation information setting unit 22 of the switch 20b deletes the port identifier eth3 representing the bypass port from the aggregation information recorded in the aggregation group information recording unit 24 (S240), and, moreover, adds the port identifier etho representing the failed port (S240). As a result, the aggregation information returns to the information shown in FIG. 23(a).

On this occasion, the association between the failed group identifier oxooBB and the determined bypass port eth3 is deleted from the determined bypass port recording unit 204 (refer to FIG. 31(c)) (S241).

It should be noted that the VLAN setting unit 206 does not rewrite the recorded content of the VLAN table recording unit 23. In other words, the VLAN setting unit 206 does not delete the port identifier eth3 associated with the group identifier oxooBB, and recorded in the VLAN table recording unit 23. In other words, the update of the VLAN table (S206) is not carried out. Though the update of the VLAN table (S206) takes time, the update does not need to be carried out, resulting in a reduction in the time required for the processing.

Moreover, the state notification unit 218 transmits the determination of the absence of a failure by the link state determination unit 210 along with the group identifier oxooBB from the bypass port eth3, thereby notifying the switch 20a of a recovery of the link (S242).

The switch 20a receives the recovery notification, and records the schedule of the deletion of the oxooBB and eth3 in the identifier recording unit 26. The data transfer control unit 25 reads the deletion schedule, and stops the data transfer by the data transfer unit 27 (from the determined bypass port eth3 to the port etho) (S218). Then, the data transfer control unit 25 carries out the deletion of oxooBB and eth3 from the recorded content of the identifier recording unit 26 (S219).

It should be noted that the VLAN setting unit 232 does not rewrite the recorded content of the VLAN table recording unit 23. In other words, the VLAN setting unit 232 does not delete the port identifier eth3 associated with the group identifier oxooBB, and recorded in the VLAN table recording unit 23. In other words, the update of the VLAN table (S206) is not carried out. Though the update of the VLAN table (S206) takes time, the update does not need to be carried out, resulting in a reduction in the time required for the processing.

As a result of this configuration, the data to be transmitted from the server 30 via the switch 20b to the server 10 is transmitted via the physical link (from failure to recovery) connecting the port etho of the switch 20b and the port eth1 of the server 10 with each other to the server 10 as shown in FIG. 26.

According to the third embodiment, even if the links between the switch 20b and the servers 10 and 40 fail, the bypass ports eth3 and eth4 enable the data transmission to the servers 10 and 40. Moreover, multiple failures (even those in a case of link aggregation across switches) can be efficiently addressed by the small resources (number of ports).

Moreover, referring to FIG. 39, after the abnormality detection on the link (Yes in S222), the step of adding the port identifier eth3 to the VLAN tables (S203) is not carried out on the switches 20a and 20b. Further, referring to FIG. 41, after the detection of a recovery of the link (Yes in S232), the step of deleting the port identifier eth3 from the VLAN tables (S206) is not carried out on the switches 20a and 20b. As a result, the update of the VLAN tables which takes time needs not to be carried out upon the start or end of the use of the bypass port eth3, resulting in a further reduction of downtime of the communication due to a failure.

Moreover, the above-described embodiments may be realized in the following manner. A computer is provided with a CPU, a hard disk, and a media (such as a floppy disk (registered trade mark) and a CD-ROM) reader, and the media reader is caused to read a medium recording a program realizing the above-described respective components such as the respective components of the switches 20a and 20b, thereby installing the program on the hard disk. This method may also realize the above-described functions.

## Claims

1. A switch for transmitting an LACP frame to a network device, wherein:
another switch transmits another LACP frame to the network device;
the LACP frame and the other LACP frame serve to request link aggregation from the network device; and
a system identifier of the LACP frame is the same as the system identifier of the other LACP frame, said switch comprising an aggregation information setting unit that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said switch comprising:
a link state determination unit that determines presence or absence of a failure of a link to which a port represented by the port identifier is connected;
a bypass port recording unit that records the aggregation group identifier and the port identifier of the bypass port associated with each other before the determination;
a bypass port determination unit that associates the bypass port represented by the port identifier associated with a failed aggregation group identifier in the bypass port recording unit as a determined bypass port with the failed aggregation group identifier;
a data transfer unit that transfers communication data received by all ports other than the failed port and the bypass port to the determined bypass port; and
a state notification unit that transmits the failed aggregation group identifier and the port identifier of the determined bypass port associated with each other by the bypass port determination unit from the determined bypass port, wherein:
the aggregation information setting unit deletes the port identifier representing the failed port from the aggregation information, and adds the port identifier representing the determined bypass port;
the bypass port determination unit associates a different failed aggregation group identifier with a port identifier of a different determined bypass port;
the failed port is a port connected to the link which is determined to be failed by the link state determination unit; and
the failed aggregation group identifier is the aggregation group identifier associated with the failed port in the aggregation information.

2. The switch according to claim 1, comprising a virtual LAN recording unit that records the aggregation group identifier and the port identifier belonging to a virtual LAN wherein the virtual LAN recording unit records the port identifier of the bypass port associated with the aggregation group identifier in the bypass port recording unit before the determination.

3. The switch according to claim 1 or 2, wherein if the failed aggregation group identifier is not associated with the port identifier of the bypass port in the bypass port recording unit, the bypass port determination unit determines any one of the bypass ports as the determined bypass port.

4. The switch according to claim 1 or 2, wherein:
if the link state determination unit determines that the link connected to the failed port is not failed, the data transfer to the determined bypass port associated with the failed aggregation group identifier associated with the failed port (referred to as "recovered port") by the data transfer unit is stopped;
the state notification unit transmits the determination of the absence of a failure from the determined bypass port;
the aggregation information setting unit deletes the port identifier representing the determined bypass port from the aggregation information, and adds the port identifier representing the recovered port; and
the bypass port determination unit resets the association between the failed aggregation group identifier with which the recovered port is associated and the port identifier of the determined bypass port.

5. A switch for transmitting an LACP frame to a network device, wherein:
another switch transmits another LACP frame to the network device;
the LACP frame and the other LACP frame serve to request link aggregation from the network device; and
a system identifier of the LACP frame is the same as the system identifier of the other LACP frame, said switch comprising an aggregation information setting unit that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said switch comprising:
an identifier recording unit that receives and records the aggregation group identifier and a port identifier of one of the bypass ports from the bypass port, and
a data transfer unit that transfers communication data received by the bypass port represented by the port identifier recorded in the identifier recording unit to a port represented by a port identifier associated with the aggregation group identifier recorded by the identifier recording unit, and
a virtual LAN recording unit that records the aggregation group identifier and the port identifier belonging to a virtual LAN, wherein:
the virtual LAN recording unit records the port identifier of the bypass port before the bypass port receives the aggregation group identifier and the port identifier of the one bypass port; and
a port identifier of a different bypass port is associated with a different aggregation group identifier in a recorded content by the identifier recording unit.

6. The switch according to claim 5, wherein:
if determination of absence of a failure is received from the bypass port, the transfer of the communication data from the bypass port by the data transfer unit is stopped; and
the aggregation group identifier with which the port determined not to be failed is associated, and the port identifier of the bypass port associated with the aggregation group identifier are deleted from the recorded content of the identifier recording unit.

7. A method for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said method comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said method comprising:
a link state determination step that determines presence or absence of a failure of a link to which a port represented by the port identifier is connected;
a bypass port recording step that records the aggregation group identifier and the port identifier of the bypass port associated with each other before the determination;
a bypass port determination step that associates the bypass port represented by the port identifier associated with a failed aggregation group identifier in the bypass port recording step as a determined bypass port with the failed aggregation group identifier;
a data transfer step that transfers communication data received by all ports other than the failed port and the bypass port to the determined bypass port; and
a state notification step that transmits the failed aggregation group identifier and the port identifier of the determined bypass port associated with each other by the bypass port determination step from the determined bypass port, wherein:
the aggregation information setting step deletes the port identifier representing the failed port from the aggregation information, and adds the port identifier representing the determined bypass port;
the bypass port determination step associates a different failed aggregation group identifier with a port identifier of a different determined bypass port;
the failed port is a port connected to the link which is determined to be failed by the link state determination step; and
the failed aggregation group identifier is the aggregation group identifier associated with the failed port in the aggregation information.

8. A method for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said method comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said method comprising:
an identifier recording step that receives and records the aggregation group identifier and a port identifier of one of the bypass ports from the bypass port, and
a data transfer step that transfers communication data received by the bypass port represented by the port identifier recorded in the identifier recording step to a port represented by a port identifier associated with the aggregation group identifier recorded by the identifier recording step, and
a virtual LAN recording step that records the aggregation group identifier and the port identifier belonging to a virtual LAN, wherein:
the virtual LAN recording step records the port identifier of the bypass port before the bypass port receives the aggregation group identifier and the port identifier of the one bypass port; and
a port identifier of a different bypass port is associated with a different aggregation group identifier in a recorded content by the identifier recording step.

9. A program of instructions for execution by a computer to perform a process for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said process comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said process comprising:
a link state determination step that determines presence or absence of a failure of a link to which a port represented by the port identifier is connected;
a bypass port recording step that records the aggregation group identifier and the port identifier of the bypass port associated with each other before the determination;
a bypass port determination step that associates the bypass port represented by the port identifier associated with a failed aggregation group identifier in the bypass port recording step as a determined bypass port with the failed aggregation group identifier;
a data transfer step that transfers communication data received by all ports other than the failed port and the bypass port to the determined bypass port; and
a state notification step that transmits the failed aggregation group identifier and the port identifier of the determined bypass port associated with each other by the bypass port determination step from the determined bypass port, wherein:
the aggregation information setting step deletes the port identifier representing the failed port from the aggregation information, and adds the port identifier representing the determined bypass port;
the bypass port determination step associates a different failed aggregation group identifier with a port identifier of a different determined bypass port;
the failed port is a port connected to the link which is determined to be failed by the link state determination step; and
the failed aggregation group identifier is the aggregation group identifier associated with the failed port in the aggregation information.

10. A program of instructions for execution by a computer to perform a process for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said process comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said process comprising:
an identifier recording step that receives and records the aggregation group identifier and a port identifier of one of the bypass ports from the bypass port, and
a data transfer step that transfers communication data received by the bypass port represented by the port identifier recorded in the identifier recording step to a port represented by a port identifier associated with the aggregation group identifier recorded by the identifier recording step, and
a virtual LAN recording step that records the aggregation group identifier and the port identifier belonging to a virtual LAN, wherein:
the virtual LAN recording step records the port identifier of the bypass port before the bypass port receives the aggregation group identifier and the port identifier of the one bypass port; and
a port identifier of a different bypass port is associated with a different aggregation group identifier in a recorded content by the identifier recording step.

11. A computer-readable medium having a program of instructions for execution by a computer to perform a process for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said process comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said process comprising:
a link state determination step that determines presence or absence of a failure of a link to which a port represented by the port identifier is connected;
a bypass port recording step that records the aggregation group identifier and the port identifier of the bypass port associated with each other before the determination;
a bypass port determination step that associates the bypass port represented by the port identifier associated with a failed aggregation group identifier in the bypass port recording step as a determined bypass port with the failed aggregation group identifier;
a data transfer step that transfers communication data received by all ports other than the failed port and the bypass port to the determined bypass port; and
a state notification step that transmits the failed aggregation group identifier and the port identifier of the determined bypass port associated with each other by the bypass port determination step from the determined bypass port, wherein:
the aggregation information setting step deletes the port identifier representing the failed port from the aggregation information, and adds the port identifier representing the determined bypass port;
the bypass port determination step associates a different failed aggregation group identifier with a port identifier of a different determined bypass port;
the failed port is a port connected to the link which is determined to be failed by the link state determination step; and
the failed aggregation group identifier is the aggregation group identifier associated with the failed port in the aggregation information.

12. A computer-readable medium having a program of instructions for execution by a computer to perform a process for transmitting an LACP frame to a network device with using a switch, wherein:
another switch transmits another LACP frame to the network device;
the LACP frame and the other LACP frame serve to request link aggregation from the network device; and
a system identifier of the LACP frame is the same as the system identifier of the other LACP frame, said process comprising an aggregation information setting step that receives a notification that the aggregation request by the LACP frame is permitted from the network device, and sets aggregation information, wherein:
the aggregation information includes a system identifier, an aggregation group identifier, and a port identifier;
a bypass port of the switch is connected to a bypass port of the other switch; and
a plurality of the bypass ports exist, said process comprising:
an identifier recording step that receives and records the aggregation group identifier and a port identifier of one of the bypass ports from the bypass port, and
a data transfer step that transfers communication data received by the bypass port represented by the port identifier recorded in the identifier recording step to a port represented by a port identifier associated with the aggregation group identifier recorded by the identifier recording step, and
a virtual LAN recording step that records the aggregation group identifier and the port identifier belonging to a virtual LAN, wherein:
the virtual LAN recording step records the port identifier of the bypass port before the bypass port receives the aggregation group identifier and the port identifier of the one bypass port; and
a port identifier of a different bypass port is associated with a different aggregation group identifier in a recorded content by the identifier recording step.
